Europäisches Patentamt

(19) European Patent Office

Office européen des brevets

(11) Publication number: **0 086 633**
**B1**

(12) **EUROPEAN PATENT SPECIFICATION**

(45) Date of publication of patent specification: **03.06.87**

(21) Application number: **83300680.2**

(22) Date of filing: **10.02.83**

(51) Int. Cl.⁴: **B 60 R 22/20**

(54) Adjustable anchorages.

(30) Priority: **11.02.82 GB 8203979**
**08.04.82 GB 8210494**
**24.05.82 GB 8215103**

(43) Date of publication of application:
**24.08.83 Bulletin 83/34**

(45) Publication of the grant of the patent:
**03.06.87 Bulletin 87/23**

(84) Designated Contracting States:
**AT CH DE FR GB IT LI NL SE**

(56) References cited:
**DE-A-2 625 572**
**DE-A-2 657 819**
**DE-A-2 932 505**
**DE-A-2 947 391**
**DE-A-3 005 818**
**DE-U-7 302 459**
**DE-U-7 821 970**
**DE-U-7 925 896**
**GB-A-2 070 414**

(73) Proprietor: **ASE (UK) LIMITED**
**Norfolk Street**
**Carlisle Cumbria CA2 5HX (GB)**

(72) Inventor: **Temple, John Douglas**
**50 Housesteads Road**
**Carlisle Cumbria (GB)**
Inventor: **Anderson, Alexander Barrie**
**7 Lazonby Terrace**
**Carlisle Cumbria (GB)**
Inventor: **Patterson, Michael**
**22 Currock Road**
**Carlisle Cumbria (GB)**

(74) Representative: **Jones, Ian et al**
**POLLAK MERCER & TENCH High Holborn House**
**52-54 High Holborn**
**London WC1V 6RY (GB)**

Courier Press, Leamington Spa, England.

## Description

This invention relates to adjustable anchorages, for example anchorages which can be used in seat belt systems of vehicles, particularly road vehicles.

The invention is concerned particularly but not exclusively with adjustable anchorages for the upper end of the shoulder belt of a motor vehicle seat belt system. The shoulder belt extends in use diagonally downwards from the anchorage across the torso of the user and may have one end secured to the vehicle by way of the anchorage. Alternatively, the belt may extend to the anchorage from a retractor, the anchorage providing a loop or slot through which the belt is guided.

Known adjustable shoulder anchorages tend to be inconvenient to use, costly and complicated to manufacture and unreliable in operation. The present invention seeks to overcome these disadvantages.

Particular known anchorages subjects to the above disadvantages are shown in DE—A—2947391 and DE—A—3005818. The anchorage of the first of these has a two-part carriage including a U-shaped frame in which a block supporting a seat belt running loop is pivotally mounted and biassed by a spring acting between the carriage parts. In the second document the anchorage has a carriage between which and a track side wall a spring-loaded bolt acts to urge a stud on the carriage into a hole in the opposite track side wall. The carriage itself is pivotable on a bolt located in a slot in the rear wall of the track and extending perpendicularly to the plane of the rear wall.

In the anchorage of DE—A—2947391, the block part of the carriage has protrusions which engage in corresponding recesses in a track part of the anchorage in order to secure the carriage at a selected position along the track. The degree of engagement of these protrusions with the recesses is determined by force of the spring acting between the carriage parts and no movement of the protrusions into enhanced engagement with the recesses is possible in response to a pull on a seat belt supported by the carriage.

According to the present invention there is provided an adjustable anchorage for a seat belt system, comprising a carriage, support means on the carriage for a component of the seat belt system, a track guiding the carriage for movement therealong in order to adjust the position of the carriage relative to the track, and latch means on the carriage and engageable with the track, characterised in that the support means is mounted on the carriage for movement relative thereto from a first position in response to a load applied to the component, and by means responsive to this movement to enhance engagement of the latch means with the track.

Preferably the track has a plurality of latch configurations spaced therealong and the biassing means is arranged to bias the latch means to engage with an adjacent latch configuration.

Advantageously, the latch means and the latch configurations are adapted to permit ratcheting of the latch means on the latch configurations during movement of the carriage along the track when the support means is in its first position.

This provides a particularly convenient anchorage in which the carriage can be adjusted with a ratcheting action yet is firmly anchored to the track in response to a pull on a seat belt with which it is used.

To release the carriage of the anchorage of DE—A—2947391, it is necessary to move the block part of the carriage in a direction different from either direction of possible movement of the carriage along the track. Adjustment of the anchorage can therefore be a rather inconvenient operation.

The invention also provides an adjustable anchorage for a seat belt system, comprising a carriage, a track slidably guiding the carriage for movement along the track in first and second opposite directions, support means on the carriage for a component of a seat belt system, a plurality of latch recesses spaced along the track and latch means movably mounted on the carriage and biassed to engage in an adjacent one of the latch recesses to prevent movement of the carriage in at the first direction, characterised in that the support means is slidable relative to the carriage in the first and second directions, and by co-operating means on the support means and on the latch means whereby on movement of said support means on the carriage in the second direction the latch means is moved to permit movement of the carriage in at least the first direction.

The latch means can comprise two arms pivoted on the carriage with the support means therebetween, the latch recesses being arranged in pairs with the recesses of each pair being in opposite longitudinal edges of the track, and a pin and slot mechanism being operative between the support means and the carriage to effect inwards movement of the arms in response to movement of support means in the first direction.

The anchorage of DE—A—2947391 has the disadvantage that release of the carriage at a point between neighbouring latch recesses on the track will result in the carriage remaining in an unlatched condition until it is moved into latching engagement with the track.

The invention also provides an adjustable anchorage comprising an element having a slot with at least one narrow portion joining spaced wider portions, a member received in the slot and having a base portion which is wider than the wider slot portions, an intermediate portion receivable in a wider slot portion but not receivable in a narrow slot portion, an outer portion receivable in a narrow slot portion, and resilient biassing means biassing the member so that its intermediate portion is normally received in a wider slot portion but allowing the member to be movable against the resilient bias to a position in which the outer portion is received in the slot and the member is movable therealong, characterised in that the

member received in the slot has a portion between the intermediate and outer portions which tapers inwardly in the outward direction from a width greater than the width of the narrow slot portion to the width of the said outer portion.

This permits a preferably construction in which the tapering portion comprises a frusto-conical portion and the walls of the slot are advantageously shaped to co-operate with the tapering portion in such a way that the member received in the slot, when released at a position between the wider slot portions, is urged by the resilient biasing means into a position in which its intermediate portion is received in a wider slot portion.

The track of the anchorage of DE—A—2947391 is secured to a vehicle by means of anchorage points at its two opposite ends. The anchorage is therefore not suited to securement in a vehicle by means of the single shoulder anchorage point customarily provided in vehicles.

Further, the invention provides an adjustable anchorage for a seat belt system, comprising a first member having means defining a slot therein and a second member received in the slot, the slot-defining means defining a plurality of spaced positions along the slot at which the first member is securable against movement along the slot and anchorage being characterised in that the first member has support means for a seat belt and the second member has means for securement to a vehicle body.

In such an anchorage, the second member can be conveniently secured to a single vehicle anchorage point.

Conveniently, the slot-defining means comprise slot walls defining at least two wider slot portions and at least one intermediate narrower portion, a portion of the second member receivable in the slot being engageable with the first member in a first position relative to said first member and at a said wider slot portion and being movable from its first position to a second position relative to the first member in order to free the second member from its engagement with the first member for movement along the slot to a different wider slot portion.

The portion of the second member receivable in the slot may include a first portion which is of sufficient width to engage with the slot wall means at the wider slot portions in the first relative position and a second portion of lesser width which can pass through the narrower slot portion from the second relative position, the first and second relative positions being attained by relative movement of the first and second members transversely to the plane in which the slot extends.

In other constructions, the portion of the second member receivable in the slot includes a portion which has a dimension in a first direction which is large enough to engage with the slot wall means at the wider slot portions in the first relative position and a dimension in a second direction, different from the first direction, which is small enough to allow the second member to pass through the narrower slot portion from the second relative position, the first and second relative positions being attained by rotation of the second member about an axis transverse to the plane in which the slot extends.

With a view to providing an anchorage of compact dimensions and in which adjustment can take place without any movement of the carriage transversely to the direction of extent of the track of the anchorage, the present invention provides, in another aspect, an adjustable anchorage comprising a first member having a slot and a second member received in the slot which has at least one narrow portion joining wider portions, the wider slot portions defining anchorage positions of the second member relative to the first member and the anchorage being characterised in that the second member is rotatable relative to the first member about an axis transverse to the direction of extent of the slot and is so shaped that, in a first angular position thereof relative to said first member, said first and second members are relatively movable in the direction of extent of the slot and that, in a second angular position thereof relative to said first member, the second member is restrained against such movement by engagement in a wider slot portion.

The anchorage of DE—A—2947391 is rather complicated in construction because its carriage consists of the U-shaped frame and block mentioned above, together with a spring, two swivel bolts, bores co-operating with the bolts, a seat belt support loop and bracket, and an anchoring bolt for the loop and bracket. This construction can be simplified by the present invention which also provides an adjustable anchorage for a seat belt system, comprising a carriage having support means for a component of the seat belt system, a track guiding the carriage for movement along the track in order to adjust the position of the carriage relative to the track, the track including a longitudinally-extending rear wall portion, and latch means comprising a first latch element on the carriage and a series of second latch elements spaced along the track, the carriage being rockable against the bias of resilient biasing means between a first position in which the first latching element is in engagement with a selected second latching element to secure the carriage at a selected position along the track and a second position in which the first latch element is released from the second latch element to permit movement of the carriage means along the track to a different selected position therealong and the anchorage being characterised in that the resilient biasing means act directly between the rear wall portion and the carriage to bias the carriage towards its first position.

Embodiments of the invention will now be described by way of example with reference to the drawings, in which:—

Figure 1 is a side view of a belt support assembly forming part of a first vehicle seat belt shoulder anchorage embodying the invention;

Figure 2 is an exploded perspective view of the assembly of Figure 1 and of a track in which it is received;

Figure 3 is a part-sectional front view with parts removed of the assembly received within the track;

Figures 4 to 6 are views corresponding to those of Figures 1 to 3 of a second anchorage embodying the invention;

Figures 7a and 7b are section views of parts of the anchorage shown in Figures 4 to 6 in operation;

Figure 8 is a perspective view of a third such anchorage embodying the invention;

Figure 9 is a front view of the anchorage of Figure 8, shown partly broken away to reveal the interior;

Figure 10 is a partial perspective view of a fourth such anchorage embodying the invention;

Figure 11 is a front view of the anchorage of Figure 10, again shown partly broken away:

Figure 12 is an exploded view of an anchorage which is a fifth embodiment of the invention;

Figure 13 is a side view, partly in section, illustrating the use of the anchorage of Figure 12 as a shoulder anchorage for a vehicle seat belt;

Figure 14 is a partial perspective of the track with which the anchorage of Figure 12 is used;

Figure 15 is a side view illustrating one method of attaching the anchorage of Figure 12 to a support;

Figure 16 further illustrates the method of use of the anchorage shown in Figures 12 to 15;

Figure 17 is a side view of an anchorage which is a sixth embodiment of the invention;

Figure 18 is a front view of a movable member of an adjustable shoulder anchorage which is a seventh embodiment of the invention;

Figure 19 is a sectional side view of the shoulder anchorage of Figure 18;

Figure 20 is a front view of an adjustable shoulder anchorage which is an eighth embodiment of the invention;

Figure 21 is a partial sectional side view of the anchorage of Figure 20;

Figure 22 is an exploded perspective view of a vehicle seat belt anchorage which is a ninth embodiment of the invention;

Figures 23 and 24 are sectional side views, on a smaller scale, of the anchorage of Figure 22;

Figure 25 is a plan view of a modified form of the anchorage of Figures 22 to 24; and

Figure 26 is a front view of a vehicle post to which the anchorage of Figure 25 can be attached.

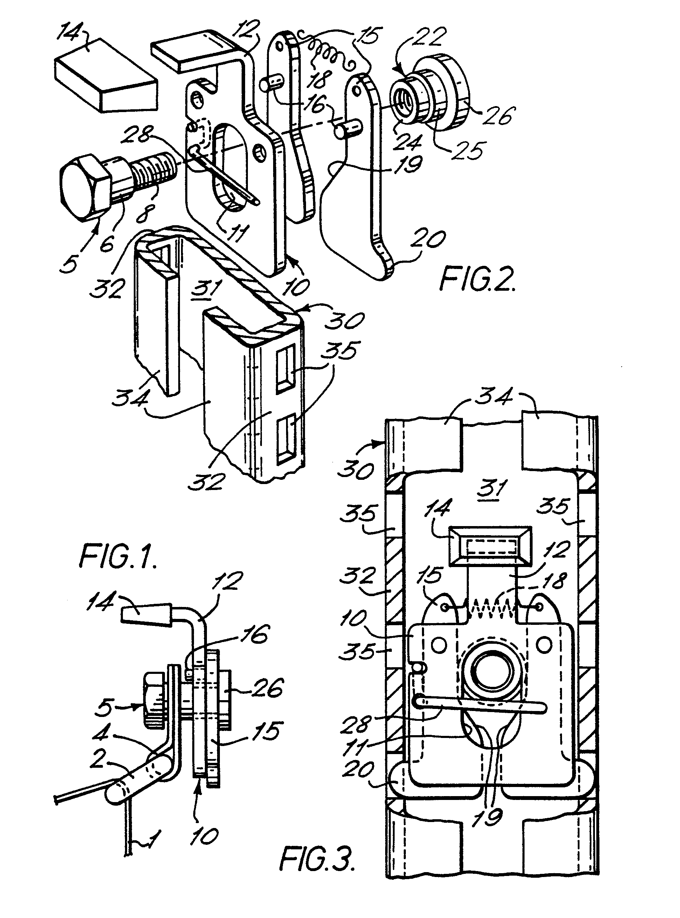

The seat belt 1 shown in Figure 1 extends upwardly from an emergency locking retractor (not shown) through an elongate metal loop 2, and then diagonally downwards across the torso of the wearer. The loop 2 is held with its plane inclined to the horizontal by means of a metal bracket 4 consisting of a metal plate folded around the upper longer side of the loop and secured thereto, the doubled over portion of the bracket being apertured to receive therethough a headed bolt 5 with a plain shank portion 6 and a threaded free end 8.

The bolt 5 forms a part of the belt support assembly which comprises also a carrier slide 10 having a generally rectangular portion with a central upright elongate slot 11 (Figure 2), and an upper extension portion 12 the free end of which is bent forwardly to receive thereon a knob 14 by which the assembly can be manipulated.

A pair of lockbars 15 are pivotally connected to the slide 10, rearwardly of the knob 14, each lockbar comprising a plate with a pin 16 projecting into an aperture in the slide 10 to afford the pivotal connections. Above the pivotal connections, the two lockbars 15 are apertures for connection together by a tension spring 18, and below the pivotal connection, the lockbars widen out towards each other over inclined ramp portions 19. At its lower end, each lockbar 15 has a laterally outwardly extending pawl portion 20.

An actuator 22 of stepped circular cross-section has small diameter end portion 24 which is centrally tapped to receive the threaded shank 8 of the bolt 5. The end portion 24 abuts the end of the bolt portion 6 and is received in the elongate slot 11 of the frame 10. An intermediate portion 25 of the actuator, of larger diameter, is received between the upper portions of the lockbars 15, and an end portion 26 of larger diameter still, bears against the rear sides of the lockbars to retain them in assembly with the frame 10. One side edge of the slide 10 has a notch and an aperture by means of which a spring 28 is mounted so as to act on the underside of the bolt portion 8, to urge this and the actuator 25 upwardly in the slide 10, so that the portion 25 is above the lockbar ramp portions 19.

The belt support assembly is received within an elongate metal track 30 (Figures 2 and 3) comprising a rear web 31 and side webs 32 from which front webs 34 extend parallel to the rear web to spaced apart edges. The front webs 34 trap the assembly within the track, and through the slot between them the bolt 5 and the knob 14 outwardly project. Apertures 35 in the side webs 32 are spaced apart along the length of the track and are arranged in transversely opposed pairs.

The belt support assembly is received within the track 30, with the lockbar pawl portions 20 normally extending in an opposed pair of the apertures 35 to hold the assembly in position. The actuator 22 is urged by the spring 28 into the upper end of the slot 11, and in this condition, the assembly can be freely ratcheted up or down along the track, the knob 14 being manually grasped to effect the movement. The pawl portions 20 have rounded edges shaped so that they can readily ride out of the side web apertures 35 at the start of this movement against the force of the tension spring 18, which however causes them to enter each opposed pair of the apertures as they come into adjacency with them.

The belt support assembly is thus normally held in position in the track 30 in a manner readily

permitting movement. However, as soon as a downward force is applied to the bolt 5, as by tension in the belt 1 acting through the elongate loop 2 and bracket 4, the intermediate actuator portion 25 moves downwardly in the frame slot 11, against the spring 28, and in doing so, it acts on the ramp portions 19 of the lockbars 15, to force the pawl portions 20 outwardly into the apertures 35 so that the assembly is very firmly latched against movement in the track.

The belt support assembly can thus normally be moved fairly freely up and down the track 30, but is immediately and automatically locked in position when tension is applied to the belt 1, as would occur under emergency conditions, when the belt is restraining its wearer against forward movement from his seat.

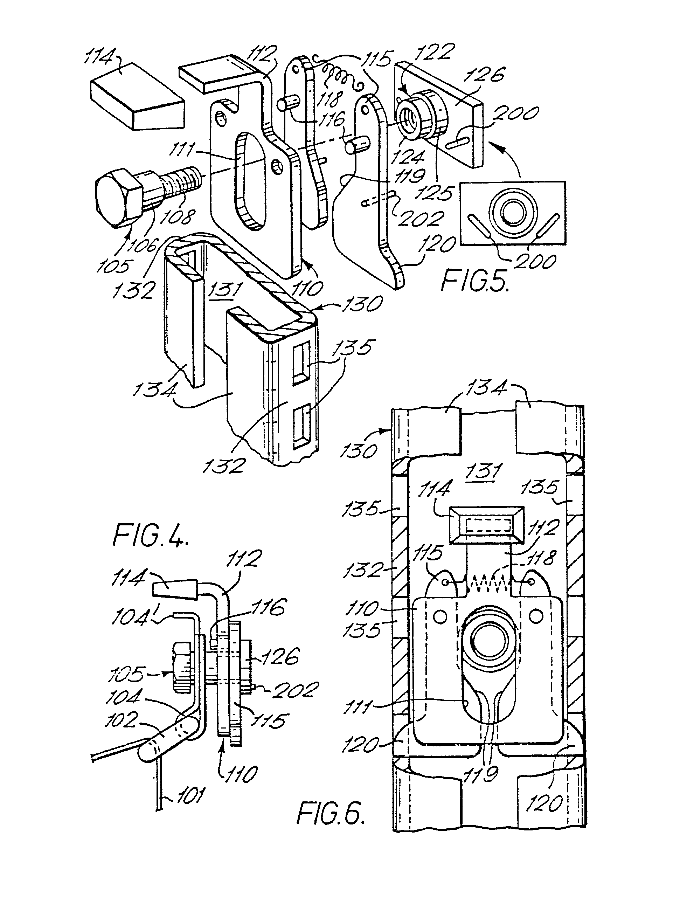

The second embodiment shown in Figures 4 to 7 will now be described. Parts of the second embodiment corresponding to parts of the first embodiment are indicated by reference numerals increased by 100.

Figure 4 corresponds closely to Figure 1 and will not be described in detail except to say that the metal bracket 104 of this second embodiment differs from the bracket 4 of Figure 1 in having an outwardly turned extension portion 104′ above the bolt 105 and generally parallel with the knob 114. Alternatively, this extension portion 104′ could be formed on the bolt 105, on a loop cover, or on any other suitable component in this area.

In a manner similar to the first embodiment, the second embodiment includes a pair of lockbars 115 having pins 116 projecting into apertures in the slide 110 to provide the pivotal connections, a tension spring 118, and, on the lockbars 115, inclined ramp portions 119 and pawl portions 120.

An actuator 122 of the second embodiment comprises a head portion 126 of generally rectangular shape, an intermediate cylindrical portion 125, and a small diameter end portion 124 which is centrally tapped to receive the threaded shank 108 of the bolt 105. The end portion 124 abuts the end of the bolt portion 106 and is received in the elongate slot 111 of the slide 110. The intermediate portion 125 of the actuator is received between the upper portions of the lockbars 115. The rectangular head portion 126 bears against the rear sides of the lockbars 115 to retain them in assembly with the slide 110.

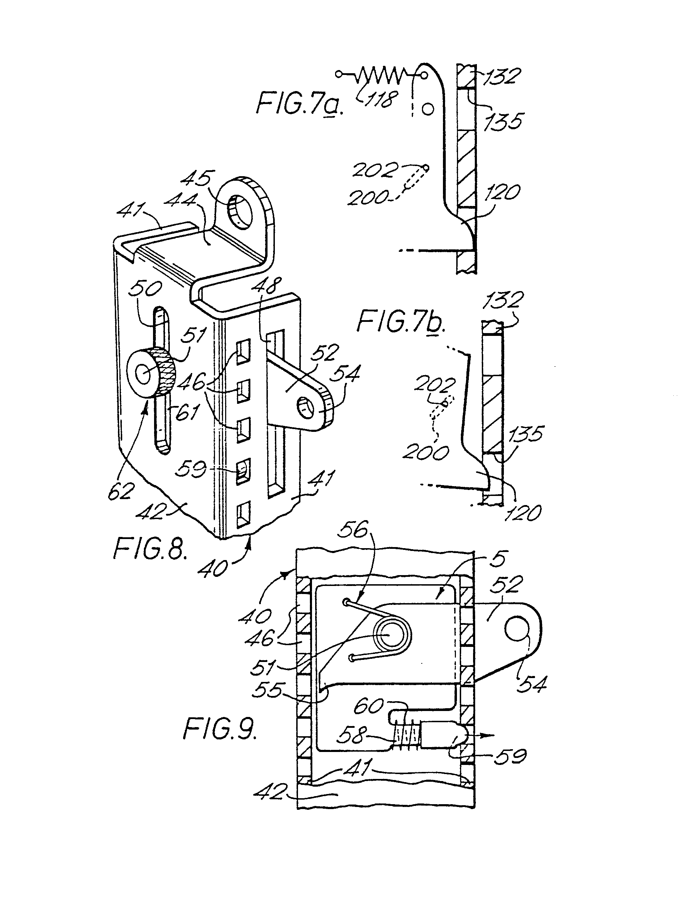

Two slots 200 are provided in the head portion 126 of the actuator 122, one on each side of the intermediate portion 125 and angled as shown in Figure 5. Two pins 202 extend rearwardly one for each lockbar 115. These pins 202 are located respectively one in each of the slots 200.

The belt support assembly is received within an elongate metal track 130 comprising a rear web 131, side webs 132 from which front webs 134 extend parallel to the rear web and terminating in spaced edges. The front webs 134 trap the assembly within the track, and through the slot between them the bolt 105, the loop extension 104′ and the knob 114 project outwardly. Apertures 135 in the side webs 132 are spaced along the length of the track and are arranged in transversely opposed pairs.

With this second embodiment the locking members, i.e. the lockbars 115, are always latched except when one is manually adjusting the anchorage. In the normal position, i.e. the resting position, when the seatbelt is being worn, the lockbars 115 are latched into the slots 135 in the track, as shown in Figure 7a. In this position the pins 202 on the lockbars 115 are positioned at the top of the two slots 200. It should also be noted that the sides of the head portion 126 of the actuator 122 located on the inside faces of the side webs 132 of the track 130. This prevents rotation of the actuator 122 relative to the assembly.

If one wishes to raise the belt support assembly relative to the track, then an upward movement of the running loop 102 and bracket 104, which are connected to the sliding components, causes the pins 202 to be urged down the slots 200 towards the position shown in Figure 7b. As this happens so the pawl portions 120 of the lockbars 115 are withdrawn from engagement with the slots 135 (Figure 7b). This also causes the spring 118 to be tensioned. The disengagement of the pawls 120 from the slots 135 is aided by rounding the top corner of the pawls so that they then "roll over" the adjacent upper edge of the slot 135. The lower portion of each pawl 120 is formed with a sharply defined edge for definite latching engagement of the pawl in the slot. Once the pawls are disengaged from the slots the belt support assembly can be moved up the track to another setting.

In order to adjust the belt support assembly downwards relative to the track, one simply manually pinches together the knob 114 and the extension piece 104′. The action of pinching these components together has the effect of again camming the pins 202 down the slots 200, thus forcing the lockbars 115 out of engagement. The assembly can then be lowered to the desired new setting. The lockbars 115 are then re-engaged due to the action of the tensioned spring 118.

Advantageously, the slots 200 extend upwardly beyond the position of pins 202 shown in Figure 7a so that a predetermined tension in the belt can cause downward movement of the belt support assembly relative to the slide 110, so that the lockbars 115 are urged outwardly by action of the portion 125 on the ramp portions 119, and the pawl portions 120 are urged further into the recesses 135.

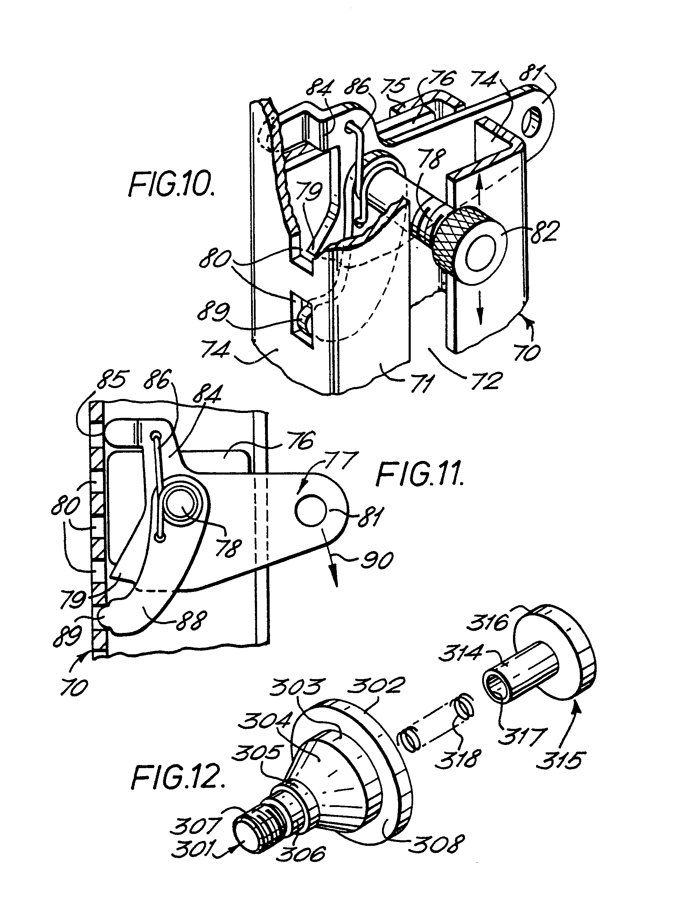

In the third embodiment shown in Figures 8 and 9, the track 40 is channel shaped, the side webs 41 extending from the front centre web 42 towards the door pillar to which the track is secured by one or more inwardly bent extension portions 44 of the centre web, apertured at 45 to receive a bolt or other fastener. The side webs 41 are provided with rows of apertures 46 and one side web has a longitudinal slot 48 parallel to the row of apertures and nearer than the row to the free edge of the web.

The carrier slide 50 has the form of a plate, received within the track parallel to and adjacent the front web 42, on which is pivoted, by way of a pin 51, a lever 52 having an apertured end 54 projecting outwardly of the track through the slot 48 and an opposed end 55 formed as a tooth. A spring 56 received around the pivot pin has a respective areas engaging the lever and the slide end urges the lever into the position shown in which the toothed end 55 is spaced away from the apertures in the adjaecnt side web 41. The apertured end 54 of the lever carries a running loop (not shown) for the belt. A cut-out towards the lower edge of the slide defines an arm 58 on which is carried a ball catch having a detent element 59 urged by a spring 60 to releasbly enter the apertures in the adjacent side web 41.

In the normal position shown, the spring 56 holds the toothed end 55 of the lever 52 clear of the side web apertures but a sufficient pull transmitted through the belt to the lever overcomes the spring force so that the lever is securely locked to the track by engagement of the toothed end into one of the side web apertures. The spring 60 applies force to the detent element 59 to retain the slide 50 in the position along the track to which it has been set. The slide 50 can however be moved manually along the track by means of a portion, conveniently constituted by an extension of the pin 51, projecting outwardly through a longitudinal slot 61 in the front web 42. This portion of the pin 51 can be threaded for reception of a lock nut 62, so that the slide can be releasably retained in the selected position by tightening the nut against the front web. The ball catch serves to locate the slide 50 so that the toothed end 55 is correctly positioned to engage the side web apertures 46.

In the fourth embodiment shown in Figures 10 and 11, the track 70 has a front web 71 with a longitudinal slot 72, side webs 74, and rear webs 75 turned towards each other. A platelike carrier slide 76 moves along the track against the rear webs 75 and pivotably carries a lever 77 by means of a pivot pin 78. The lever 77 has a toothed end 79 engageable in spaced side web apertures 80, and an apertured end 81 projecting outwardly of the track 70 through a slot in the other side web 74 to support the seat belt. The pivot pin 78 has a threaded end portion projecting outwardly through the front web slot 72 for reception of a lock nut 82 or other releasable fastener for clamping the slide 76 in a selected position along the track.

The lever 77 is normally held in the inoperative position shown by an upper arm portion 84, the free end 85 of which bears against the side web 74 with the row of apertures 80 under the urging of a two-armed spring 86 received on the pin 78. The arm portion 84 is cranked so that the free end portion 85 engages the side web alongside the apertures 80. The spring 86 acts with its other arm not on the slide 76 but on a detect lever 88 pivoted on the pin 78 and having a detent end portion 89 received in the apertures 80 to correctly locate the slide 76 for engagement of the toothed end 79 into one of these apertures when a sufficient pull is experienced on the lever 77, typically in the belt direction indicated by the arrow 90.

The embodiments of the invention shown in Figures 12 to 17 are particularly suitable for use as an adjustable shoulder anchorage for vehicle seat belts, but the anchorages can also be used, for example, for the adjustment of a normal tunnel-mounted buckle which normally remains stationary during adjustment of the associated seat. Additionally, the adjustable anchorages shown in Figures 12 to 17 can also be used for a seat adjusting mechanism. However, in the following description, these anchorages are described in relation to a shoulder anchorage for a vehicle seat belt.

The embodiment shown in Figures 12 to 16 will first be described.

The main component of the anchorage is a specially shaped latching plunger indicated generally at 301. This latching plunger 301 comprises a relatively large diameter cylindrical portion 302; a smaller diameter cylindrical portion 303; a frusto-conical portion 304; a yet smaller diameter cylindrical portion 305, a cylindrical stub portion 306 of yet smaller diameter, and an externally screw-threaded boss 307. The largest diameter cylindrical portion 302 thus defines a flat annular face 308.

The cylindrical portion 306 of the plunger 301 carries a normal webbing guide loop 309 which is attached to an elongate metal loop 310 which is connected to the seat belt (not shown) itself. A spring 311 is seated between the guide loop 309 and the step between the plunger portions 305 and 306, in order thereby to bias the guide loop 309 forwards against a locknut 312 which is screwed on to the threaded boss 307. The biassing force exerted by the spring 311 prevents excessive end float of the guide loop 309.

The rear face of the latching plunger 301 is provided with a cylindrical recess 313 which is arranged to receive, in sliding telescopic manner, a cylindrical rod 314 of a locating member which is indicated generally at 315 and which has a substantially cylindrical head 316 integral with the rod 314. The rod 314 is provided with a cylindrical recess 317, and a spring 318 is fitted within the recesses 313 and 317, seated against the respective ends of the recesses, and biassing the latching plunger 301 and locating member 315 apart.

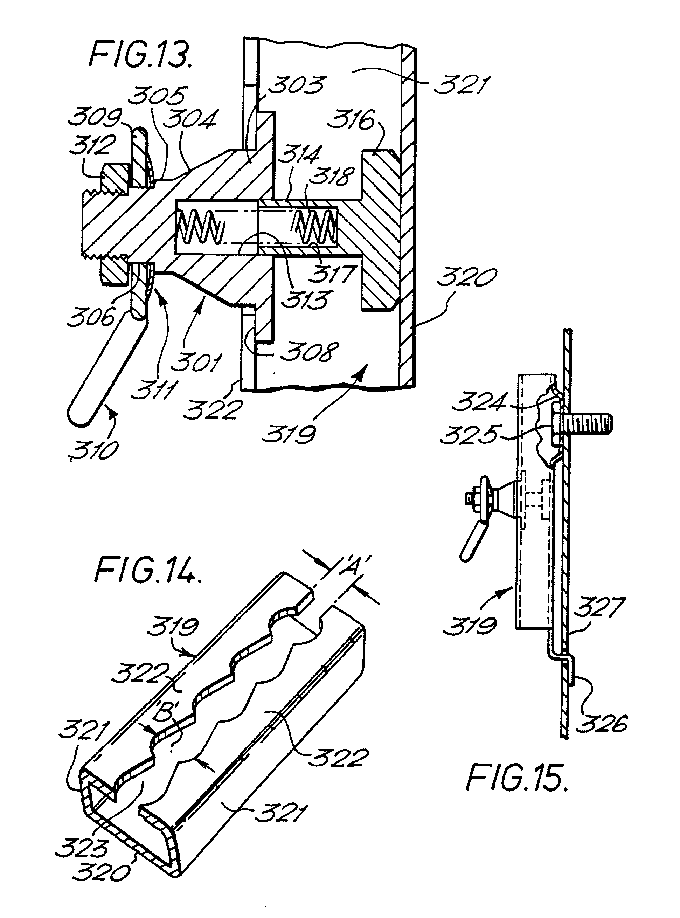

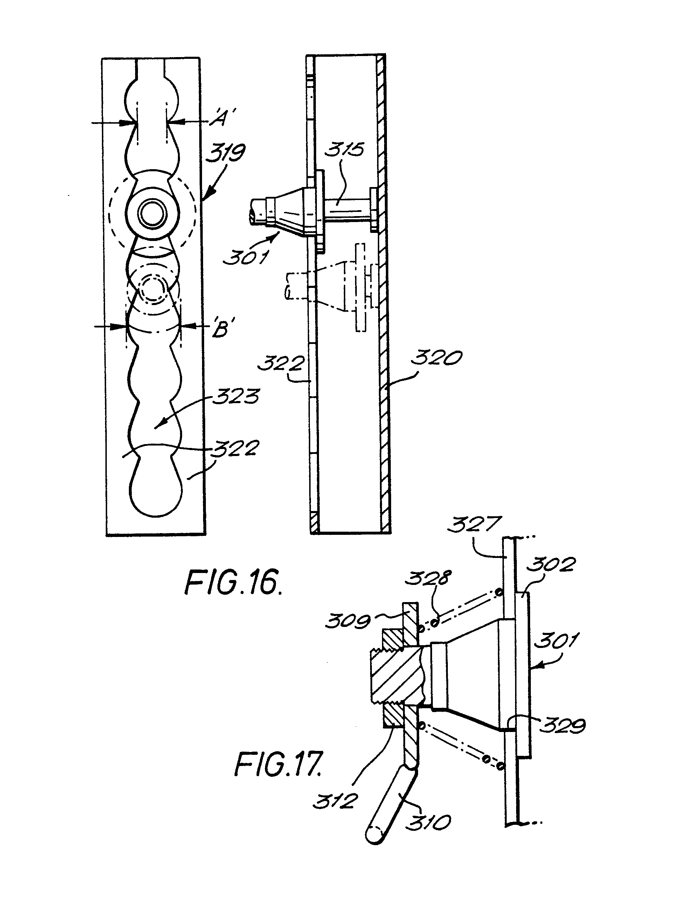

The belt support assembly functions in cooperation with a track 319, which may be openended, or closed at one end as shown in Figure 16, comprises a rear web 320, side webs 321, and front webs 322 which extend parallel to the rear web and which define spaced edges, as shown most clearly in Figures 14 and 16. These spaced edges have a generally scallopped shape so that the gap 323 between the edges is of varying width along the length of the elongate metal track. This gap 323 has a minimum width, as indicated by the dimensions A in Figures 14 and 16, and a maximum width, indicated by the dimension B in Figures 14 and 16. The maximum gap width B corresponds to the diameter of cylindrical portion 303 of the latching plunger 301. The minimum gap width A corresponds to the diameter of cylindrical portion 305 of the latching plunger 301.

The locating member 315 is made of a suitable low-friction material so that the outer face of the head 316 can slide on the inside face of the rear web 320 of the track 319. The latching plunger 301 is made of a suitably strong material to be able to withstand normal seatbelt loadings. During normal belt wearing the various components of the adjustable anchorage are positioned as shown in Figure 13 and in the upper portion of Figure 16. In this position the latching plunger 301 is engaged, its annular face 318 bears against the inside face of the inturned front webs 322 of the track, and the plunger projects to its maximum extent from the elongate slot or gap 323 in the track. In order to be able to adjust the position of the belt support assembly relative to the track, either upwards or downwards, it is simply necessary to depress the locating plunger 301 against the force of the compression spring 318. This causes the cylindrical portion 305 of the plunger to become aligned with the gap 323 in the track, as shown most clearly in Figure 16, whereupon the locating plunger can be moved up or down the track with a sliding movement. When the correct position has been reached the plunger 301 is released and is immediately biassed outwardly by the compression spring 318 so that it resumes a latched position in relation to the track. The system is "self-levelling" due to the action of the compression spring 318 which provides an outward bias for the plunger, and due to the tapering surface of the frusto-conical portion 314 of the plunger which makes it impossible for the plunger to adopt any latched positioned other than that shown in Figure 16 where it occupies a portion of the gap 323 which is of maximum transverse dimension.

Figure 15 shows one method whereby the anchorage can be mounted on a car body, for example on a door pillar. As shown in Figure 15 the upper portion of the track 319 is provided with a rearwardly extending bracket portion 324 through which a fastening bolt 325 is fitted. The bottom end of the track 319 is provided with a downwardly and rearwardly extending tang 326 which fits into a suitable hole or slot in the door pillar 327.

Figure 17 shows the sixth embodiment which is a modified version of the adjustable anchorage of Figures 12 to 16. This embodiment is particularly suited to an original equipment fitment. In this modified version a helical spring 328 is positioned between the normal running loop 309 and the face of the car body or door pillar 327. The outer face of the B pillar 327 can be shaped with a plurality of keyhole-type slots 329 into which the largest diameter portion 312 of the latching plunger 301 can be fitted. In this modified version one avoids the need to use the compression spring 318, the biassing spring 311, the locating member 315 and the track 319 of the embodiment shown in Figures 12 to 16. The method of adjustment of this anchorage is however the same as that described above in relation to the fifth embodiment.

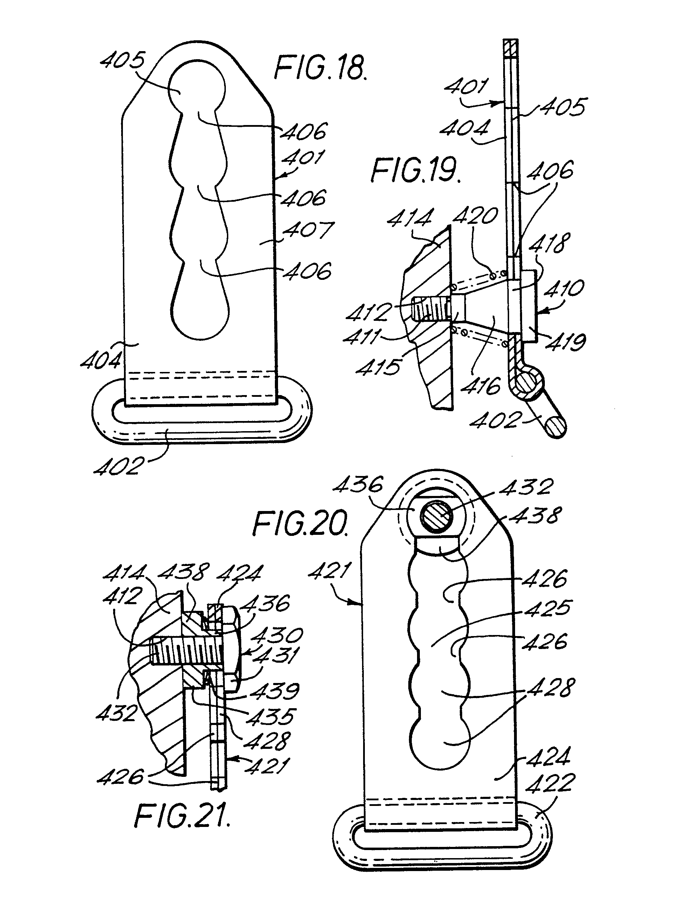

Figures 18 and 19 show a seventh embodiment of the present invention. The adjustable shoulder belt anchorage of Figures 18 and 19 comprises a movable member 401 having a belt support in the form of an elongate metal guide or running loop 402 carried at the lower end of a generally flat plate member 404. The plate member 404 is formed from an elongate metal strip folded on itself centrally about one long side of the running loop 402, the loop being held to the plate member so that its plane projects diagonally downwardly and outwardly from the plate member. Above the running loop 402, the plate member 404 is generally rectangular except for a rounded upper end; it is provided along its vertical axis with a symmetrical elongate aperture 405. From the semicircular lower end of the aperture 406, the aperture sides taper uniformly inwards to a restriction 406 in a pear-shaped pattern which is repeated above the restriction, in that the aperture broadens out over circular arcs to the diameter of the lower end and then again narrows to the next restriction 406, the pattern being again repeated up to the upper end of the aperture, at which the arcuate sides are continued to join together.

Co-operating with the movable member 401 is a fixed member 410 having an externally screw-threaded end portion 411 received in a tapped hole 412 provided in a vehicle frame, for example, in a pillar 414 between the front and rear doors of a private motor car. Such a hole is conventionally provided to receive a fixed belt support means. Adjoining the end portion 411, the fixed member 410 has an inner cylindrical portion 415 of slightly greater diameter providing a step which abuts against the pillar around the tapped hole 412. From the cylindrical portion 415, the member 410 flares outwardly over a frustoconical portion 416 which ends with an outer cylindrical portion 418 of about the thickness of the plate member 404. At the free end of the outer, larger diameter, cylindrical portion 418, the fixed member 410 has a head 419 which may be shaped, for example hexagonally, so as to facilitate mounting of the fixed member into the hole 412. The fixed member 410 is received through the aperture 404 of the movable member and, however shaped, the head 419 has a transverse dimension greater than the greatest width of the aperture, so that the movable member 401 is trapped between the head and the pillar 414. The diameter of the larger cylindrical portion 418 corresponds to the greatest width of the aperture 405 and the diameter of the smaller cylindrical portion 415 corresponds to the width of the restrictions 406.

Spring means in the form of a frustoconical coiled compression spring 420 acts between the pillar 414 and the adjacent face of the plate member 404 to cause this to abut the fixed element head 419, the outer cylindrical portion 418 being received in the lowermost, as shown, or in another of the four wider portions of the aperture 405.

When it is desired to adjust the anchorage to vary the height of the running loop 402, the movable member 401 is pushed towards the pillar 414 against the force of the spring 420 until the inner cylindrical portion 415 of the plate member is received in the apertures 405. In this condition, the movable plate member 401 can be raised or lowered freely; release of the pressure urging the movable member towards the pillar 414 will permit the spring 420 to return te movable member outwardly, away from the pillar, with the cylindrical portion 418 received in the nearest wide portion of the aperture. The frustoconical fixed member portion 416 guides the movable member to such an end position of it is not exactly registered with the intended aperture portion.

In the adjustable shoulder anchorage of Figures 20 and 21, a movable member 421 comprises a running loop 422 and a plate member 424 of substantially the same shape, size and structure as the equivalent elements of Figures 18 and 19, plate member being however provided with an elongate aperture 425 which again extends along the vertical axis of the member but which is of different shape. As appears from Figure 20, the aperture 425 comprises a series of parallel-sided restrictions 426 joining wider aperture portions 428 formed by circular arcs. The aperture 425 thus corresponds to a series of circular holes joined by a slot of lesser width than the hole diameter.

A fixed member 430 of the shoulder anchorage of Figures 20 and 21 comprises a bolt with a head 431 and a screw-threaded shank 432 received in the tapped hole 412 in the vehicle door pillar 414. Trapped between the pillar 414 and the bolt head 431 is a spacer 435 having adjacent the bolt head a portion 436 with arcuate ends lying on a circle of the same diameter as the portions 428 of the aperture 425, the arcuate ends being joined by horizontal plane portions spaced apart by a distance corresponding to the width of the restrictions 426. The bolt head 431 is omitted from Figure 20 so that the shape of the spacer portion 436 can be seen. Between the portion 436 and the pillar 414, the spacer 435 has a cylindrical portion 438 of greater diameter than that of the aperture portions 428.

The movable member 421 is received on the fixed member 431 with the portion 436 received in the aperture 425 so the plate member 424 is trapped between the spacer cylindrical portion 438 and the bolt head 431. Spring means in the form of a dished spring washer 439 acts between the spacer portion 438 and the plate member 424.

It will be clear from Figure 20 that the movable member 421 will remain securely mounted on the fixed member 430 as long as the axis of the former does not approach the horizontal. Adjustment of the level of the loop 422 can however be effected by rotating the movable member 421 about the spacer 435 through 90° in either direction. The movable member can then be moved horizontally, because the planar sides of the spacer portion 436 can be received between the restrictions 426 in the aperture 425. When the desired adjustment has been made, the movable member 421 can be allowed to fall back to a generally vertical position as shown in Figure 20, which the spacer portion 436 received in a selected one of the portions 425 of the aperture 425. It will be noted that the spring washer 439 does not have to be substantially stressed in order to allow adjustment to be made but serves to keep the relatively movable part of the anchorage in abutment to prevent rattle and oppose undesired rotation of the movable member 421.

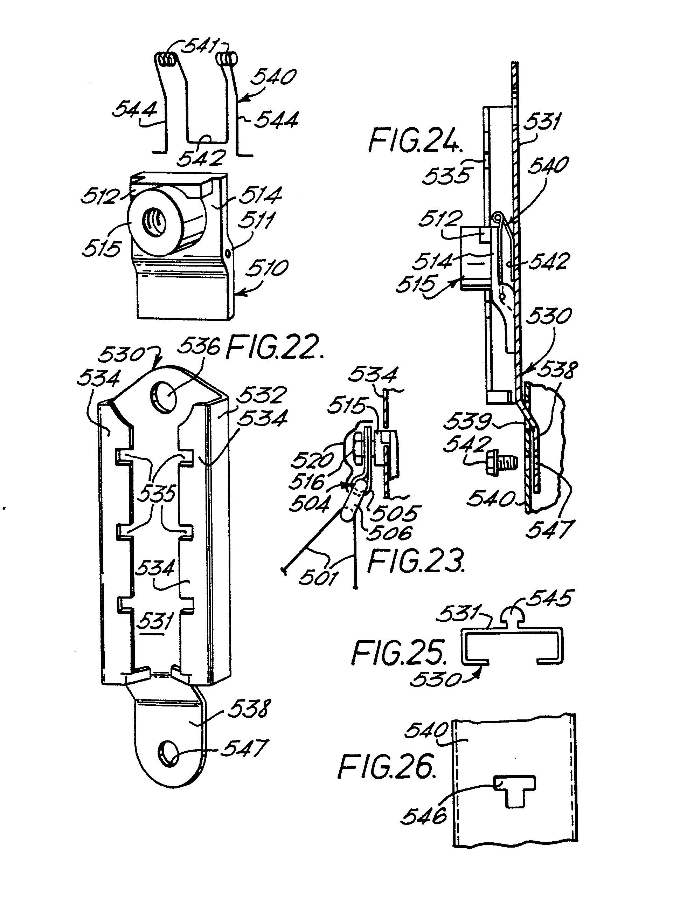

The anchorage embodying the invention shown in Figures 22 to 24 comprises a track 530 in the general form of a channel member having a rear web 531, side webs 532 and front webs 534 extending inwardly from the forward edges of the side webs. The track 530 is provided with pairs of opposed cut-outs 535 in the free edges of front webs 534. The track 530 has an upper extension portion of the rear web 531 with an aperture 536 for securement of the track to the vehicle. The lower end of the rear web 531 has a downwardly and rearwardly extending tong 538 having an aperture 547.

A carrier slide 510 received within the track 530 has upper and lower parallel plate portions, which are spaced apart so that the slide approximates in width to the spacing between the front 534 and rear 531 webs of the track, and which merge together by way of a central portion 511. A forward facing ridge 512 at the top of the upper slide portion 514 can be received in the cut-outs 535 and the ridge merges with a circular boss 515 also projecting forwardly from the upper slide portion. The boss projects beyond the front webs 534 and is tapped to receive a bolt 516 for supporting a bracket 504, which consists of a plate 505 folded around a running loop 506 for a seat belt 501 (see Figure 23). The plate 505 has an aperture which receives the bolt 516.

The forward projection of the ridge 512 is small enough for it to be received within the track 530 for movement therealong by pivotation of the slide about an axis extending through the central portion 511. This pivotation is opposed by a torsion spring 540 acting between the slide and the rear web 531 of the frame. The spring has two aligned coil portions 541 joined by a downwardly extending U-shaped intermediate portion 542 bent rearwardly to bear against the web 531 and having at their outer ends downwardly extending arm portions 544 which bear against the inner surface of the upper plate portion. At the lower ends of the portions 544, out-turned ends are received in aligned apertures formed in side flanges at the central portion 511 of the slide.

As can be seen in Figure 24, the spring 540 normally urges the carrier slide forwardly in the track so that the ridge 512 securely engages in the cut-outs 535. The forward component of tension in the belt 501 produced by the belt retracting force of the retractor (not shown) from which the belt 501 extends or by the user of the belt enhances this engagement. For movement along the track 530, the top of the slide is pivoted inwardly so that the ridge 512 lies inwardly of the front webs 534.

The track 530 of the anchorage can be secured to the "B" post of the vehicle in which it is to be used, as by bolts (not shown) at each end extending through apertures such as the aperture 536 in the rear webs 131 of the tracks 130 into tapped holes in the post, which is usually box-sectioned.

It may be that only one such tapped hole is available and the lower end of the track may then be secured as shown in Figures 22 and 24 or Figures 25 and 26. In Figures 22 and 24, the tong 538 of the rear web 531 is received in a slot 539 (Figure 24) in the front wall 540 of the vehicle "B" post. The tong 538 and the wall 540 can be provided with registering holes respectively, of which the hole 547 of the tong 538 can be tapped, for reception of a bolt 542 of like fastener.

Instead, as shown in Figure 25, the lower end of the rear web 531 has a rearwardly extending tong 545 with a neck receivable in the stem of a T-shaped slot 546 in the front wall 540 of the "B" post.

The anchorage described can include a cover 520, suitably of plastics material which makes a snap-fit over the bracket 504 as shown in Figure 23. The anchorages shown in Figures 1 to 21, can also be fitted with suitable plastics covers.

Although the movable members illustrated in the drawings include belt support means in the form of guide or running loops for use with seat belt systems in which the belt extends upwardly from a retractor to the loop and then diagonally downwardly across the torso of the user, it will be understood that other forms of belt support means can be included, for example, detachable guide loops or detachable on permanent connections to belt ends where the belt is part of a static system without a retractor.

**Claims**

1. An adjustable anchorage for a seat belt system, comprising a carriage (10; 110; 50; 76), support means (5, 22; 105, 122; 57; 77) on the carriage for a component (2; 102) of the seat belt system, a track (30; 130; 40; 70) guiding the carriage for movement therealong in order to adjust the position of the carriage relative to the track, and latch means (20; 120; 55, 59; 84, 88) on the carriage and engageable with the track, characterised in that the support means (5, 22; 105, 122; 57; 77) is mounted on the carriage (10; 110; 50; 76) for movement relative thereto from a first position in response to a load applied to the component (2; 102), and by means (19, 22; 116, 122; 55; 79) responsive to this movement to enhance engagement of the latch means (20; 120; 55, 59; 84, 88) with the track (30; 130; 40; 70).

2. An anchorage according to claim 1, including resilient means (28) opposing the movement of the support means (5, 22) from its first position.

3. An anchorage according to claim 1 or 2, including resilient means (18; 118; 60; 86) biassing the latch means (20; 120; 55, 59; 84, 88) into the said engagement with the track (30; 130; 40; 70).

4. An anchorage according to claim 3, wherein the track (30; 130; 40; 70) has a plurality of latch configurations (35; 135; 46; 80) spaced therealong and the biassing means (20; 120; 55, 59; 84, 88) is arranged to bias the latch means (20; 120; 55, 59; 84, 88) to engage with an adjacent latch configuration (35; 135; 46; 80).

5. An anchorage according to claim 3, wherein the latch means comprises at least one arm (15; 115; 52; 77, 88) pivoted on the carriage (10, 110; 50; 76), the latch configurations comprising apertures (35; 135; 46; 80) in a wall (32; 132; 41, 74) of the track (30; 130; 40; 70) into which an end portion (20; 120; 55; 79, 89) of the arm (15; 115; 52; 77, 88) can project.

6. An anchorage according to claim 3 or 4, wherein the track (30; 130) comprises opposed parallel side walls (32; 132), spaced apertures (35; 135) in the side walls, and a front wall (34; 134) having a longitudinal slot, the carriage comprises a plate (10; 110) member slidably guided by the front and side walls and having a slot (11; 111) extending parallel to the front wall slot, the latch means comprises two plate-like arms (15; 115) pivoted (16; 116) on the plate member and having free ends (20; 120), and spring means (18; 118) biassing the arms (15; 115) to urge their free ends (20; 120) into the side wall apertures (35; 135), and the support means (5, 22; 105, 122) extends through the front wall and carriage slots (11; 111) and has a portion (25; 125) received between the arms (15; 115), the support means and the arms being co-operatively shaped (15, 25; 115, 125) whereby the support means has a position along the plate member slot (11; 111) in which the arm free ends (20; 120) are additionally urged into the side wall apertures (35; 135).

7. An anchorage according to claim 4 or 5, wherein the latch means (20; 120; 55, 59; 84, 88) and the latch configurations (35; 135; 46; 80) are adapted to permit ratcheting of the latch means on the latch configurations during movement of the carriage (10; 110; 50; 16) along the track (30; 130; 40; 10) when the support means (5, 22; 105, 122; 57; 77) is in its first position.

8. An anchorage according to any preceding claim, wherein the latch means comprises two arms (15; 115) pivoted on the carriage (10; 110) with the support means (5, 22; 105, 122) therebetween, the arms (15; 115) being so shaped that movement of the support means (5, 22; 105, 122) from its first position cams the arms (15; 115) outwardly into enhanced engagement with the track (30; 130.

9. An anchorage according to claim 4, wherein the engagement of the latch means (120) with the adjacent latch configuration (135) when the support means (105, 122) is in its first position prevents movement of the carriage (110) in at least one direction, the support means (105, 122) being manually movable relative to the carriage (110) in a direction other than the direction of movement in response to the said load in order to effect movement of the latch means (120) to permit movement of the carriage (110) in the said at least one direction.

10. An anchorage according to claim 9, wherein the latch means (120) is pivoted (116) on the carriage (110) and the manual movement of the support means (105, 122) cams the latch means (120) from its engagement with the track (130).

11. An anchorage according to claim 9 or 10, wherein the latch means (120) comprises two arms (115) pivoted (116) on the carriage (110) with the support means (105, 122) therebetween, a pin (202) and a slot (200) mechanism being operative between the support means (105, 122) and the carriage (110) to effect inwards pivoting of the arms (115) in response to the said manual movement of the support means (105, 122).

12. An anchorage according to claim 4, wherein the track (40; 70) has a plurality of latch configurations (46; 80) spaced therealong and the latch means (55, 59; 84, 88) comprises first latch means (59; 89) permanently biassed to engage an adjacent latch configuration (46; 80) to oppose but not prevent movement of the carriage (50; 70) along the track (40; 70) and second latch means (55; 79) engageable with a latch configuration (46; 80) on the movement of the support means (57, 77) relative to the carriage (50; 76) from the said first position to prevent movement of the carriage along the track in at least one direction.

13. An anchorage according to claim 12, wherein the first (89) and second (79) latch means are so positioned that the said engagement of the first latch means (89) locates the carriage for precise engagement of the second latch means (79) with a latch configuration (80).

14. An anchorage according to claim 12 or 13, wherein said first latch means comprises a spring-urged detent pin (59).

15. An anchorage means according to claim 12 or 13, wherein said first (89) and second (79) latch means comprise latch portions of spring-biassed arms (84, 88) pivoted on the carriage (76).

16. An anchorage according to any one of claims 12 to 15, wherein the support means (52; 77) is pivoted on the carriage (50; 76) and the second latch means comprises an end (55; 79) portion of the support means (52; 77).

17. An adjustable anchorage for a seat belt system, comprising a carriage (110), a track 130) slidably guiding the carriage for movement along the track in first and second opposite directions, support means (105, 122) on the carriage for a component (102) of a seat belt system, a plurality of latch recesses (135) spaced along the track and latch means (120) movably mounted on the carriage (110) and biassed to engage in an adjacent one of the latch recesses (135) to prevent movement of the carriage in at least the first direction, characterised in that the support means (105, 122) is slidable relative to the carriage (110) in the first and second directions, and by cooperating means (200, 202) on the support means (105, 122) and on the latch means (120) whereby on movement of said support means (105, 122) on the carriage (110) in the second direction the latch means (120) is moved to permit movement of the carriage (110) in at least the first direction.

18. An anchorage according to claim 17, wherein the support means (105, 122) is movable on the carriage (110) from an intermediate position, in which movement of the carriage (110) in the first direction is prevented by engagement of the latch means (120) and the adjacent latch recess (135), in the first and second directions to second and third positions respectively, the carriage (110) being free for movement in either direction in the second position and the said engagement of the latch means (120) and latch recesses (135) being enhanced in the second position.

19. An anchorage according to claim 17 or 18, wherein the latch means (120) comprises two arms (115) pivoted on the carriage (110) with the support means (122) therebetween, the latch recesses (135) being arranged in pairs with the recesses of each pair being in opposite longitudinal edges (132) of the track (130), and a pin and slot mechanism (200, 202) being operative between the support means (122) and the carriage (110) to effect inwards movement of the arms (115) in response to movement of support means (122) in the first direction.

20. An anchorage according to any preceding claim, including means (62; 82) for selectively clamping the carriage (10; 110; 50; 76) to the track (30; 130; 40; 70).

21. An anchorage according to any preceding claim, wherein the support means (5, 22; 105; 122; 57; 77) is adapted to receive the upper end of the diagonal run (1) of a vehicle seat belt.

22. An adjustable anchorage comprising an element (319; 327; 401) having a slot (323; 329; 405) with at least one narrow portion (406) joining spaced wider portions, a member (301; 410) received in the slot and having a base portion (302; 419) which is wider than the wider slot portions, an intermediate portion (303; 418) receivable in a wider slot portion but not receivable in a narrow slot portion, an outer portion (305; 415) receivable in a narrow slot portion, and resilient biassing means (318; 328; 420) biassing the member so that its intermediate portion (303; 418) is normally received in a wider slot portion but allowing the member (301; 410) to be movable against the resilient bias to a position in which the outer portion (305; 415) is received in the slot (323; 329, 405) and the member (301; 410) is movable therealong, characterised in that the member (301; 410) received in the slot (323; 329; 405) has a portion (304; 416) between the intermediate (303; 418) and outer (305; 415) portions which tapers inwardly in the outward direction from a width greater than the width of the narrow slot portion (406) to the width of the said outer portion (305; 415).

23. An anchorage according to claim 22, wherein the tapering portion comprises a frustoconical portion (304; 416).

24. An anchorage according to claim 21 or 22, wherein the walls of the slot (323; 329; 405) are shaped to co-operate with the tapering portion (304; 416) in such a way that the member (301; 410) received in the slot, when released at a position between the wider slot portions, is urged by the resilient biassing means (318; 328; 420) into a position in which its intermediate portion (303; 418) is received in a wider slot portion.

25. An anchorage according to any one of claims 22 to 24, wherein the narrow slot portion (406) is defined by opposed inwardly projecting pointed portions of the walls of the slot (323; 329; 405).

26. An anchorage according to any one of claims 22 to 25, wherein the resilient biassing means comprises at least one compression spring (328) acting between the slotted element (327) and an abutment (309) on the member received (301) in the slot, the abutment lying outwardly of the said outer portion.

27. An anchorage according to claim 26, wherein the resilient means comprises a tapering compression spring (328) surrounding the said tapering portion and increasing in cross-section in the same direction as the tapering portion.

28. An anchorage according to any one of claims 22 to 25, including a support member (315) for the member (301) received in the slot, the support member (315) cooperating with the received member (301) to allow the said movement thereof against the resilient biassing means which comprises a compression spring (318) acting between the support and received members (315, 301), the slotted member comprising a channel-section member (319) having a slotted front wall (322) and a rear wall (320) which is spaced from the front wall (322) and on which the support member (315) is slidable.

29. An anchorage according to claim 28, wherein the support member has a base portion (316) and a guide post portion (314) extending from the base portion, the received member having a recess (313) opening through its base portion (316) and slidably receiving the guide post portion (314), and the resilient biassing means comprising a compression spring (318) seated in the recess (313) and acting between the support and received members (315, 301).

30. A seat belt system including an adjustable anchorage according to any one of claims 22 to 29.

31. An adjustable shoulder anchorage for a seat belt system, the anchorage being in accordance with any one of claims 22 to 29.

32. An anchorage according to claim 31 when dependent from claim 26 or 27, wherein the slotted element (329) is a portion of the structure of a motor vehicle and the received member (301) has a support means (310) for a vehicle seat belt positioned outwardly of its outer portion.

33. An anchorage according to claim 31 when dependent from any of claims 22 to 25, wherein the slotted element (401) has support means (402) for a vehicle seat belt and comprises a first elongate portion and a second elongate portion extending from one end of the first portion, around a seat belt running loop (402) constituting the support means for a seat belt, to lie in face-to-face contact with the first portion, the slot (405) being formed by aligned slots in said first and second portions.

34. An adjustable anchorage for a seat belt system, comprising a first member (404; 424) having means defining a slot (405; 425) therein and a second member (410; 430) received in the slot, the slot-defining means defining a plurality of spaced positions (425) along the slot (405; 425) at which the first member (404; 424) is securable against movement along the slot and anchorage being characterised in that the first member (404; 424) has support means (402; 422) for a seat belt and the second member has means (412; 432) for securement to a vehicle body (414).

35. An anchorage according to claim 34, wherein the slot-defining means comprise slot walls defining at least two wider slot portions (428) and at least one intermediate narrower portion (406; 426), a portion (415, 416, 418; 436) of the second member (410; 430) receivable in the slot (405; 425) being engagable with the first member (404; 424) in a first position relative to said first member and at a said wider slot portion (428) and being movable from its first position to a second position relative to the first member (404; 424) in order to free the second member (410; 430) from its engagement with the first member (404; 424) for movement along the slot (405; 425) to a different wider slot portion (428).

36. An anchorage according to claim 35, wherein the portion of the second member (410) receivable in the slot (405) includes a first portion (418) which is of sufficient width to engage with the slot wall means at the wider slot portions in the first relative position and a second portion (415) of lesser width which can pass through the narrower slot portion (406) from the second relative position, the first and second relative positions being attained by relative movement of the first (404) and second (410) members transversely to the plane in which the slot (405) extends.

37. An anchorage according to claim 36, wherein the first (418) and second (415) portions are circular cylindrical portions disposed coaxially with respect to an axis in the direction of which the relative movement of the first (404) and second (410) members takes place.

38. An anchorage according to claim 37, wherein the first (418) and second (415) circular cylindrical portions are joined by a frusto-conical portion (416).

39. An anchorage according to any one of claims 36 to 38, including resilient biassing means (420) biassing the first (404) and second (410) members towards their first relative position.

40. An anchorage according to claim 39, wherein the resilient biassing means comprising a coil spring (420) extending around the second member (410) and having first and second ends which respectively about the first member (404) and are positioned for abutment with a motor vehicle body.

41. An anchorage according to claim 39 or 40, wherein the slot wall means are shaped to co-operate with the receivable portion (415, 416, 418) of the second member (410) in such a way that the second member (410) is urged by the resilient biassing means (420) to a wider slot portion when released from its second position between adjacent wider slot portions.

42. An adjustable anchorage according to claim 35, wherein the portion (436) of the second member (430) receivable in the slot (425) includes a portion which has a dimension in a first direction which is large enough to engage with the slot wall means at the wider slot portions (428) in the first relative position and a dimension in a second direction, different from the first direction, which is small enough to allow the second member (410) to pass through the narrower slot portion (426) from the second relative position, the first and second relative positions being attained by rotation of the second member (410) about an axis transverse to the plane in which the slot (425) extends.

43. An adjustable anchorage according to claim 42, wherein the wider slot portions (428) are formed by opposed part circular cylindrical portions of the slot wall means and the portion (436) of said second member receivable in the slot has opposed part circular cyindrical portions joined by opposed flat portions spaced by no more than the width of the narrower slot portion (426), the first and second relative positions of the first (424) and second (430) members being attainable by rotation of the second member (430) about the axis of the cylinder defining its part circular cylindrical portions.

44. An anchorage according to claim 42 or 43, wherein the second member (430) comprises a threaded shank (432) constituting the means for securement to a vehicle body (414) and a shoulder (436) extending around the shank and having the said dimensions in first and second directions transverse to the axis of the shank (432).

45. An anchorage according to claim 44, wherein the shank is the shank (432) of a bolt which has a head (431) which abuts the first member (424) in the first and said second relative positions of the first (424) and second (430) members, the shoulder (436) being formed on a collar member (435) having a bore through which the shank (432) passes.

46. An adjustable anchorage comprising a first member (421) having a slot (425) and a second member (430) received in the slot which has at least one narrow portion (426) joining wider portions (428), the wider slot portions defining anchorage positions of the second member (430) relative to the first member (421) and the anchorage being characterised in that the second member (430) is rotatable relative to the first member (421) about an axis transverse to the direction of extent of the slot (425) and is so shaped that, in a first angular position thereof relative to said first member, said first and second members are relatively movable in the direction of extent of the slot and that, in a second angular position thereof relative to said first member, the second member is restrained against such movement by engagement in a wider slot portion (428).

47. An anchorage according to claim 46, wherein the second member (430) has opposed part-circular cylindrical portions centred on the said transverse axis and joined by opposed flat portions spaced by no more than the width of said narrow slot portions (426) and opposed walls of the wider slot portions (428) are respective portions of corresponding cylindrical surfaces.

48. An anchorage according to claim 46 or 47, wherein one of the first (421) and second (430) members has support means (422) for a seat belt and the other has means (430) for mounting the anchorage on a motor vehicle body (414).

49. An anchorage according to claim 48, wherein the first member (421) has support means (422) for a seat belt.

50. an anchorage according to any one of claims 34 to 49, wherein the first member (421) has a first elongate plate portion and a second elongate plate portion extending from one end of said first elongate portion, around a portion of a seat belt running loop (402; 422) constituting the support means, to lie in face-to-face contact with the first elongate portion, the slot (420; 425) being formed by aligned slots in said first and second elongate portions.

51. An adjustable anchorage for a seat belt system, comprising a carriage (510) having support means (504, 505, 506) for a component (501) of the seat belt system, a track (530) guiding the carriage (510) for movement along the track in order to adjust the position of the carriage relative to the track, the track (530) including a longitudinally-extending rear wall portion (531), and latch means comprising a first latch element (512) on the carriage and a series of second latch element (535) spaced along the track, the carriage being rockable against the bias of resilient biassing means (540) between a first position in which the first latch element (512) is in engagement with a selected second latch element (535) to secure the carriage (510) at a selected position along the track (530) and a second position in which the first latch element (512) is released from the second latch element (535) to permit movement of the carriage (510) along the track (530) to a different selected position therealong and the anchorage being characterised in that the resilient biassing means (540) act directly between the rear wall portion (531) and the carriage (510) to bias the carriage towards its first position.

52. An anchorage according to claim 51, wherein the support means (504, 505, 506), the first latch element (512) and the axis about which the carriage (510) is rockable are so located on the carriage that tension in a seat belt (501) supported by the support means tends to urge the first latch element (512) into engagement with an adjacent one of the second latch elements (535).

53. An anchorage according to claim 51 or 52, wherein the track has a front wall portion (534) with a longitudinal slot therein through which slot the support means (504, 505, 506) of the carriage (510) protrudes, the carriage being captive between the front (534) and rear (531) wall portions and the front wall slot having aligned notches (535) in its opposite edges constituting a series of pairs of the second latch elements and the carriage (510) having corresponding protruding formations (512) for engaging in the notches and constituting a pair of the first latch elements.

54. An anchorage according to any one of claims 51 to 53, wherein the resilient biassing means (540) comprises a torsion spring having first and second arm portions (544) engaged with the rear of the carriage (516) and an intermediate portion (542) engaged with the rear wall portion (531) of the track (530).

55. An anchorage according to any one of claims 51 to 54, wherein the carriage (516) has a first generally-planar portion (514), a second generally-planar portion extending in a second plane parallel to the first plane and displaced from the first plane in a direction laterally of the direction of movement of the carriage (510) along the track (530), and a transitional portion between the first and second portions, the support means (504, 505, 506) being on the first generally-planar portion and the carriage (510) being rockable about a transverse axis extending through or adjacent the transitional portion.

**Patentansprüche**

1. Einstellbare Verankerung für ein Sicherheitsgurtsystem, bestehend aus einem Gleitstück (10, 110, 50, 76), einer Halteeinrichtung (5, 22, 105, 122, 57, 77) am Gleitstück für ein Bauteil (2, 102) des Sicherheitsgurtsystems, einer Schiene (30, 130, 40, 70), welche das Gleitstück zur Bewegung längs der Schiene führt, um die Position des Gleitstückes in Bezug auf die Schiene einzustellen, und einer mit der Schiene in Eingriff bringbaren Verriegelungseinrichtung (20, 120, 55, 59, 84, 88) am Gleitstück, dadurch gekennzeichnet, daß die Halteeinrichtung (5, 22, 105, 122, 57, 77) am Gleitstück (10, 110, 50, 76) bei einer auf das Bauteil (2, 102) einwirkenden Belastung von einer ersten Position aus relativ beweglich gehalten ist, und daß eine auf diese Bewegung Ansprechende Einrichtung (19, 22, 116, 122, 55, 59) vorgesehen ist, um die Eingriffnahme der Verriegelungseinrichtung (20, 120, 55, 59, 84, 83) mit der Schiene (30, 130, 40, 70) zu verstärken.

2. Verankerung nach Anspruch 1, gekennzeichnet durch eine federnde Einrichtung (28), die der Bewegung der Halteeinrichtung (5, 22) aus ihrer ersten Position entgegenwirkt.

3. Verankerung nach Anspruch 1 oder 2, gekennzeichnet durch eine federnde Einrichtung (18, 118, 60, 86), die die Verriegelungseinrichtung (20, 120, 55, 59, 84, 88) in die Eingriffnahme mit der Schiene (30, 130, 40, 70) vorspannt.

4. Verankerung nach Anspruch 3, dadurch gekennzeichnet, daß die Schiene (30, 130, 40, 70) eine Vielzahl von Rastausbildungen (35, 135, 46, 80) aufweist, die längs der Schiene in Abstand voneinander angeordnet sind, und daß die Vorspanneinrichtung (20, 120, 55, 59, 84, 88) so angeordnet ist, daß sie die Verriegelungseinrichtung (20, 120, 55, 59, 84, 83) in Eingriff mit einer benachbarten Rastausbildung (35, 135, 46, 80) vorspannt.

5. Verankerung nach Anspruch 3, dadurch gekennzeichnet, daß die Verriegelungseinrichtung wenigstens einen Arm (15, 115, 52, 77, 88) umfaßt, der am Gleitstück (10, 110, 50, 76) angelenkt ist, und daß die Rastausbildungen Öffnungen (35, 135, 46, 80) in einer Wand (32, 134, 41, 74) der Schiene (30, 130, 40, 70) umfassen, in die ein Endbereich (20, 120, 55, 79, 89) des Armes (15, 115, 52, 77, 83) hineinragen kann.

6. Verankerung nach Anspruch 3 oder 4, dadurch gekennzeichnet, daß die Schiene (30, 130) gegenüberliegende parallele Seitenwände (32, 132), beabstandete Öffnungen (35, 135) in den Seitenwänden und eine Vorderwand (34, 134) mit einem Längsschlitz umfaßt, daß das Gleitstück ein Plattenelement (10, 110) umfaßt, das gleitbar von der Vorderwand und den Seitenwänden geführt ist und ein Langloch (11, 111) aufweist, das sich parallel zum Schlitz in der Vorderwand erstreckt, daß die Verriegelungseinrichtung zwei plattenförmige Arme (15, 115), die am Plattenelement angelenkt sind (16, 116) und freie Enden (20, 120) haben, sowie die Federeinrichtung (18, 118) aufweist, die die Arme (15, 115) so beaufschlagt, daß deren freie Enden (20, 120) in die Seitenwandöffnungen (835, 135) gedrückt werden, und daß sich die Halteeinrichtung (5, 22, 105, 122) durch die Vorderwand und das Langlock (11, 111) im Gleitstück erstreckt und ein Teil (25, 125) besitzt, das zwischen den Armen (15, 115) aufgenommen ist, wobei die Halteeinrichtung und die Arme zur Zusammenwirkung miteinander geformt sind (15, 25, 115, 125), so daß die Halteeinrichtung eine Position längs des Langloches (11, 111) des Plattenelementes einnimmt, bei der die freien Armenden (20, 120) zusätzlich in die Seitenwandöffnungen (35, 135) gedrückt werden.

7. Verankerung nach Anspruch 4 oder 5, dadurch gekennzeichnet, daß die Verriegelungseinrichtung (20, 120, 55, 59, 84, 88) und die Rastausbildungen (35, 135, 46, 80) eine rastende Eingriffnahme der Verriegelungseinrichtung mit den Rastausbildungen während der Bewegung des Gleitstückes (10, 110, 50, 76) längs der Schiene (30, 130, 40, 70) ermöglichen, wenn sich die Halteeinrichtung (5, 22, 105, 122, 57, 77) in der ersten Position befindet.

8. Verankerung nach einem der vorhergehenden Ansprüche, dadurch gekennzeichnet, daß die Verriegelungseinrichtung zwei Arme (15, 115) umfaßt, die am Gleitstück (10, 110) mit dazwischen angeordneter Halteeinrichtung (5, 22, 105, 122) angelenkt und so geformt sind, daß die Bewegung der Halteeinrichtung (5, 22, 105, 122) aus ihrer ersten Position die Arme (15, 115) nach außen in verstärkender Eingriffnahme mit der Schiene (30, 130) lenkt.

9. Verankerung nach Anspruch 4, dadurch gekennzeichnet, daß die Eingriffnahme der Verriegelungseinrichtung (120) mit der benachbarten Rastausbildung (135) bei in der ersten Position befindlicher Halteeinrichtung (105, 122) eine Bewegung des Gleitstückes (110) in wenigstens einer Richtung verhindert, wobei die Halteeinrichtung (105, 122) von Hand relativ zum Gleitstück (110) in eine andere als die Richtung der Bewegung aufgrund der besagten Belastung bewegbar ist, um eine Bewegung der Verriegelungseinrichtung (120) zu bewirken, so daß das Gleitstück (110) in der wenigstens einen Richtung bewegt werden kann.

10. Verankerung nach Anspruch 9, dadurch gekennzeichnet, daß die Verriegelungseinrichtung (120) am Gleitstück (110) angelenkt ist (116), und daß die manuelle Bewegung der Halteeinrichtung (103, 122) die Verriegelungseinrichtung (120) aus ihrer Eingriffnahme mit der Schiene (130) lenkt.

11. Verankerung nach Anspruch 9 oder 10, dadurch gekennzeichnet, daß die Verriegelungseinrichtung (120) zwei Arme (115) aufweist, die am Gleitstück (110) mit dazwischen liegender Halteeinrichtung (105, 122) angelenkt sind (116), wobei ein Mechanismus bestehend aus einem Stift (202) und einem Langloch (200) zwischen der Halteeinrichtung (105, 122) und dem Gleitstück (110) wirksam ist, um ein nach innen gerichtetes Schwenken der Arme (115) bei der manuellen Bewegung der Halteeinrichtung (105, 122) zu bewirken.

12. Verankerung nach Anspruch 4, dadurch gekennzeichnet, daß die Schiene (40, 70) eine Vielzahl von Rastausbildungen (46, 80) aufweist, die längs der Schiene in Abstand voneinander stehen, und daß die Verriegelungseinrichtung (55, 59, 84, 88) eine erste Riegeleinrichtung (59, 89) aufweist, die permanent vorgespannt ist, um in Eingriff mit einer benachbarten Rastausbildung (46, 80) zu treten, so daß einer Bewegung des Gleitstückes (50, 70) längs der Schiene (40, 70) eine Kraft entgegengesetzt wird, ohne die Bewegung zu verhindern, sowie eine zweite Riegeleinrichtung (55, 79) umfaßt, die mit einer Rastausbildung (76, 80) bei der Bewegung der Halteeinrichtung (57, 77) relativ zum Gleitstück (50, 76) aus der ersten Position in Eingriff bringbar ist, um eine Bewegung des Gleitstückes längs der Schiene in wenigstens eine Richtung zu verhindern.

13. Verankerung nach Anspruch 12, dadurch gekennzeichnet, daß die erste (89) und zweite (79) Riegeleinrichtung so positioniert sind, daß die Eingriffnahme der ersten Riegeleinrichtung (89) das Gleitstück zu einer genauen Eingriffnahme der zweiten Riegeleinrichtung (79) mit einer Rastausbildung (80) lokalisiert.

14. Verankerung nach Anspruch 12 oder 13, dadurch gekennzeichnet, daß die erste Riegeleinrichtung einen federbelasteten Raststift (59) umfaßt.

15. Verankerungseinrichtung nach Anspruch 12 oder 13, dadurch gekennzeichnet, daß die erste (89) und zweite (79) Riegeleinrichtung Riegelteile der federvorgespannten, am Gleitstück (76) angelenkten Arme (84, 88) umfassen.

16. Verankerung nach einem der Ansprüche 12 bis 15, dadurch gekennzeichnet, daß die Halteeinrichtung (52, 77) am Gleitstück (50, 76) angelenkt ist und die zweite Riegeleinrichtung einen Endbereich (55, 79) der Halteeinrichtung (52, 77) umfaßt.

17. Einstellbare Verankerung für ein Sicherheitsgurtsystem, bestehend aus einem Gleitstück (110), einer Schiene (130), die gleitbar das Gleitstück zur Bewegung längs der Schiene in erste und zweite entgegengesetzte Richtungen führt, einer Halteeinrichtung (105, 122) am Gleitstück für ein Bauteil (102) des Sicherheitsgurtsystems, einer Vielzahl von Rastausnehmungen (135), die längs der Schiene in Abstand voneinander angeordnet sind, und eine Verriegelungseinrichtung (120), die bewegbar am Gleitstück (110) gehalten und zur Eingriffnahme mit einer benachbarten Rastausnehmung (135) vorgespannt ist, um eine Bewegung des Gleitstückes in wenigstens die erste Richtung zu verhindern, dadurch gekennzeichnet, daß die Halteeinrichtung (105, 122) relativ zum Gleitstück (110) in die erste und zweite Richtung gleitbar ist, und daß eine zusammenwirkende Einrichtung (200, 202) an der Halteeinrichtung (105, 122) und der Verriegelungseinrichtung (120) vorgesehen ist, so daß bei einer Bewegung der Halteeinrichtung (105, 122) am Gleitstück (110) in die zweite Richtung die Verriegelungseinrichtung (120) bewegt wird, um eine Bewegung des Gleitstückes (110) in wenigstens die erste Richtung zu ermöglichen.

18. Verankerung nach Anspruch 17, dadurch gekennzeichnet, daß die Halteeinrichtung (105, 122) am Gleitstück (110) von einer Zwischenposition bei der die Bewegung des Gleitstückes (110) in die erste Richtung durch die Eingriffnahme der Verriegelungseinrichtung (120) und der benachbarten Rastausnehmung (135) verhindert ist, in die erste und zweite Richtung zur zweiten bzw. dritten Position bewegbar ist, wobei das Gleitstück (110) in jeder Richtung in der zweiten Position frei beweglich ist und die Eingriffnahme der Verriegelungseinrichtung (120) und der Rastausnehmungen (135) in der zweiten Position verstärkt ist.

19. Verankerung nach Anspruch 17 oder 18, dadurch gekennzeichnet, daß die Verriegelungseinrichtung (120) zwei am Gleitstück (110) mit dazwischen angeordneter Halteeinrichtung (122) angelenkte Arme (115) aufweist, wobei die Rastausnehmungen (135) paarweise mit den Ausnehmungen jedes Paares an gegenüberliegenden Längskanten (132) der Schiene (130) angeordnet sind, und daß ein aus einem Stift und Langloch bestehender Mechanismus (200, 202) zwischen der Halteeinrichtung (122) und dem Gleitstück (110) wirksam ist, um eine einwärts gerichtete Bewegung der Arme (115) bei einer Bewegung der Halteeinrichtung (122) in die erste Richtung zu bewirken.

20. Verankerung nach einem der vorhergehenden Ansprüche, gekennzeichnet durch eine Einrichtung (62, 82) zum gezielten Verklemmen des Gleitstückes (10, 110, 50, 76) gegenüber der Schiene (30, 130, 40, 70).

21. Verankerung nach einem der vorhergehenden Ansprüche, dadurch gekennzeichnet, daß die Halteeinrichtung (5, 22, 105, 122, 57, 77) ausgelegt ist, um das obere Ende des diagonalen Laufweges (1) eines Fahrzeugsicherheitsgurtes aufzunehmen.

22. Verstellbare Verankerungseinrichtung, bestehend aus einem Element (319, 327, 401) mit einem Langloch (323, 329, 405) mit wenigstens einen engen Bereich (406), der mit beabstandeten breiteren Bereichen verbunden ist, einem im Langlock aufgenommenen Element (301, 410) mit einem Basisteil (302, 419), das breiter als die breiteren Langlochbereiche ist, einem Zwischenteil (303, 418), das im breiteren Langlochbereich, nicht jedoch im engeren Langlochbereich aufnehmbar ist, einem äußeren Teil (305, 415), das in einem engeren Langlochbereich aufnehmbar ist, und einer federnden Vorspanneinrichtung (318, 328, 420), die das Element so vorspannt, daß dessen Zwischenteil (303, 415) normalerweise in einem breiteren Langlochbereich aufgenommen ist, jedoch ermöglicht, daß das Element (301, 410) gegen die Vorspannkraft in eine Position bewegbar ist, bei der der äußere Teil (305, 415) im Langloch (323, 329, 403) aufgenommen ist, und die es weiter ermöglicht, daß des Element (301, 410) längs des Langloches bewegbar ist, dadurch gekennzeichnet, daß das im Langloch (323, 329, 401) aufgenommene Element (301, 410) einen Teil (304, 416) zwischen dem zwischenliegenden (303, 418) und äußeren Teil (305, 415) aufweist, der sich von innen nach außen von einer Breite größer als die Breite des engen Langlochbereiches (406) zur Breite des äußeren Teiles (305, 415) verjüngt.

23. Verankerung nach Anspruch 22, dadurch gekennzeichnet, daß der sich verjüngende Teil ein kegelstumpfförmiges Teil (304, 416) ist.

24. Verankerung nach Anspruch 21 oder 22, dadurch gekennzeichnet, daß die Wände des Langloches (323, 329, 405) so geformt sind, daß sie mit dem sich verjüngenden Teil (304, 410) dergestalt zusammenwirken, daß das im Langloch aufgenommene Element (301, 410) nach Freigabe in einer Position zwischen den breiteren Langlochbereichen durch die federnde Vorspanneinrichtung (318, 328, 420) in eine Position gedrückt wird, bei der das Zwischenteil (303, 415) in einem breiteren Langlochbereich aufgenommen ist.

25. Verankerung nach einem der Ansprüche 22 bis 24, dadurch gekennzeichnet, daß der engere Langlochbereich (406) durch gegenüberliegende, nach innen ragende, spitz zulaufende Bereiche der Wände des Langloches (323, 329, 405) gebildet ist.

26. Verankerung nach einem der Ansprüche 22 bis 25, dadurch gekennzeichnet, daß die federnde Vorspanneinrichtung wenigstens eine Druckfeder (325) umfaßt, die zwischen dem gelochten Element (327) und einem Anschlag (329) an dem im Langloch aufgenommenen Element (301) wirkt, wobei der Anschlag außerhalb des äußeren Teiles liegt.

27. Verankerung nach Anspruch 26, dadurch gekennzeichnet, daß die federnde Einrichtung eine konische Druckfeder (328) ist, die den sich verjüngenden Teil umgibt und deren Querschnitt in die gleiche Richtung wie der sich verjüngende Teil zunimmt.

28. Verankerung nach einem der Ansprüche 22 bis 25, gekennzeichnet durch ein Halteelement (315) für das im Langloch aufgenommene Element (301), welches Halteelement (315) mit dem aufgenommenen Element (301) zusammenwirkt, um dessen Bewegung gegen die federnde Vorspanneinrichtung zu ermöglichen, welche eine Druckfeder (318) umfaßt, die zwischen dem Halte- und aufgenommenen Element (315, 301) wirkt, wobei das gelochte Element ein Element (319) mit U-förmigem Querschnitt und einer mit einem Langloch versehensen Vorderwand (23) und einer Rückwand (320) ist, die von der Vorderwand (322) beabstandet ist und auf der das Halteelement (315) gleitbar ist.

29. Verankerung nach Anspruch 28, dadurch gekennzeichnet, daß das Halteelement einen Basisteil (316) und einen Führungszapfenteil (314) aufweist, der sich vom Basisteil erstreckt, daß das aufgenommene Element eine Ausnehmung (313) hat, die sich durch sein Basisteil (316) öffnet und gleitbar den Führungszapfenteil (316) aufnimmt, und daß die federnde Vorspanneinrichtung eine Druckfeder (318) umfaßt, die in der Ausnehmung (313) sitzt und zwischen dem Halte- und aufgenommenen Element (315, 301) wirkt.

30. Sicherheitsgurtsystem, gekennzeichnet durch eine einstellbare Verankerung nach einem der Ansprüche 22 bis 29.

31. Einstellbare Schulterverankerung für ein Sicherheitsgurtssystem, welche gemäß einem der Ansprüche 22 bis 29 ausgebildet ist.

32. Verankerung nach Anspruch 31 bei Abhängigkeit von Anspruch 26 oder 27, dadurch gekennzeichnet, daß das gelochte Element (319) ein Teil des Aufbaues eines Kraftfahrzeuges ist, und daß das aufgenommene Element (301) eine Halteeinrichtung (310) für einen Fahrzeugsicherheitsgurt hat, der außerhalb des äußeren Teiles angeordnet ist.

33. Verankerung nach Anspruch 31 bei Abhängigkeit von einem der Ansprüche 22 bis 25, dadurch gekennzeichnet, daß das gelochte Element (401) eine Halteeinrichtung (402) für einen Fahrzeugsicherheitsgurt hat und einen ersten länglichen Teil und einen zweiten länglichen Teil umfaßt, der sich von einem Ende des ersten Teiles um einen Laufring (402) für den Sicherheitsgurt, der die Halteeinrichtung für den Gurt bildet, in eine Lage in flächenmäßiger Berührung mit dem ersten Teil erstreckt, wobei das Langloch (405) durch ausgerichtete Löcher im ersten und zweiten Teil gebildet ist.

34. Einstellbare Verankerung für ein Sicherheitsgurtsystem, bestehen aus einem ersten Element (404, 424) mit einer ein Langloch (405, 425) bildenden Einrichtung und einem zweiten Element (410, 430), das im Langloch aufgenommen ist, wobei die lochbildende Einrichtung eine Vielzahl beabstandeter Stellen (424) längs des Langloches (405, 425) vorsieht, bei denen das erste Element (404, 424) gegen eine Bewegung längs des Loches gesichert ist, dadurch gekennzeichnet, daß das erste Element (404, 424) eine Halteeinrichtung (402, 422) für einen Sicherheitsgurt aufweist, und das zweite Element eine Einrichtung (412, 432) zur Befestigung an einem Fahrzeuggehäuse (414) hat.

35. Verankerung nach Anspruch 34, dadurch gekennzeichnet, daß die lochbildende Einrichtung Lochwände umfaßt, die wenigstens zwei breitere Lochbereiche (428) und wenigstens einen zwischen liegenden engeren Bereich (406, 426) bilden, daß ein Teil (415, 416, 418, 436) des zweiten im Langloch (405, 425) aufnehmbaren Elementes (410, 430) in Eingriff mit dem ersten Element (404, 424) in einer ersten Position relativ zum ersten Element und in dem breiteren Langlochbereich (429) bringbar und von seiner ersten Position in eine zweite Position relativ zum ersten Element (404, 424) bewegbar ist, um das zweite Element (410, 430) aus seiner Eingriffnahme mit dem ersten Element (404, 424) zu lösen, so daß es längs des Langloches (405, 425) in einen anderen breiteren Schlitzbereich (428) bewegbar ist.

36. Verankerung nach Anspruch 35, dadurch gekennzeichnet, daß der Teil des zweiten im Langloch (405) aufnehmbaren Elementes (410) einen ersten Bereich (418), der ausreichend breit ist, um in Eingriff mit der Lochwandeinrichtung an den breiteren Langlochbereichen in der ersten relativen Position zu treten, und einen zweiten Teil (415) mit geringerer Breite aufweist, der durch den engeren Langlochbereich (406) von der zweiten relativen Position bewegt werden kann, wobei die erste und zweite relative Position durch eine relative Bewegung des ersten (404) und zweiten (410) Elementes quer zur Ebene, in der sich das Langloch (405) erstreckt, eingenommen werden.

37. Verankerung nach Anspruch 36, dadurch gekennzeichnet, daß der erste (418) und zweite (415) Teil kreiszylindrische Teile sind, die koaxial in Bezug auf eine Achse stehen, in deren Richtung die relative Bewegung des ersten (404) und zweiten (410) Elementes stattfindet.

38. Verankerung nach Anspruch 37, dadurch gekennzeichnet, daß der erste (418) und zweite (415) kreiszylindrische Teil durch einen kegelstumpfförmigen Teil (416) miteinander verbunden sind.

39. Verankerung nach einem der Ansprüche 36 bis 38, gekennzeichnet durch eine federnde Vorspanneinrichtung (420), die das erste (404) und zweite (410) Element in ihre erste relative Position vorspannt.

40. Verankerung nach Anspruch 39, dadurch gekennzeichnet, daß die federnde Vorspanneinrichtung eine Schraubenfeder (420) umfaßt, die sich um das zweite Element (410) erstreckt und ein erstes und zweites Ende hat, welche Enden am ersten Element (404) anliegen bzw. so positioniert sind, daß sie in Anlage mit einem Kraftfahrzeugehäuse treten können.

41. Verankerung nach Anspruch 39 oder 40, dadurch gekennzeichnet, daß die Lochwandeinrichtung zur Zusammenwirkung mit dem aufnehmbaren Teil (415, 416, 418) oder dem zweiten Element (410) dergestalt geformt ist, daß das zweite Element (410) durch die federnde Vorspanneinrichtung (420) in einen breiteren Lochbereich gedrückt wird, wenn es aus seiner zweiten Position zwischen benachbarten breiteren Lochbereichen freigegeben worden ist.

42. Einstellbare Verankerung nach Anspruch 35, dadurch gekennzeichnet, daß der Teil (436) des zweiten im Langloch (425) aufnehmbaren Elementes (430) einen Teil umfaßt, der eine Abmessung in einer ersten Richtung hat, die ausreichend groß ist, um mit der Lochwandeinrichtung an den breiteren Lochbereichen (428) in der ersten relativen Position zu treten, und welches Teil eine Abmessung in zweiten Richtung aufweist, die sich von der ersten Richtung unterscheidet, welche Abmessung klein genug ist, damit das zweite Element (410) durch den engeren Lochberch (426) aus der zweiten relativen Position bewegt werden kann, wobei die erste und zweite relative Position erhalten werden, indem das zweite Element (410) um eine Achse quer zur Ebene gedreht wird, in der sich das Langloch (425) erstreckt.

43. Einstellbare Verankerung nach Anspruch 42, dadurch gekennzeichnet, daß die breiteren Lochbereiche (428) durch gegenüberliegende teilkreiszylindrische Bereiche der Lochwandeinrichtung gebildet sind, und daß der Teil (436) des zweiten im Langloch aufnehmbaren Elementes gegenüberliegende teilkreiszylindrische Bereiche hat, die durch gegenüberliegende flache Bereiche verbunden sind, welche um mehr als die Breite des engeren Lochbereiches (426) beabstandet sind, wobei die erste und zweite relative Position des ersten (424) und zweiten (430) Elementes eingenommen werden, indem das zweite Element (430) um die Achse des Zylinders gedreht wird, der die teilkreiszylindrischen Bereiche vorsieht.

44. Verankerung nach Anspruch 42 oder 43, dadurch gekennzeichnet, daß das zweite Element (430) einen Gewindeschaft (432) umfaßt, der die Einrichtung zur Befestigung an einem Fahrzeuggehäuse (414) bildet, und daß sich eine Schulter (436) um den Schaft erstreckt, welche Schulter die besagten Abmessungen in der ersten und zweiten Richtun quer zur Achse des Schaftes (432) hat.

45. Verankerung nach Anspruch 44, dadurch gekennzeichnet, daß der Schaft der Schaft (432) eines Bolzens mit einem Kopf (431) ist, der am ersten Element (424) in der ersten und zweiten relativen Position des ersten (424) und zweiten (430) Elementes anliegt, wobei die Schulter (436) an einem Kragenelement (435) mit einer Bohrung ausgebildet ist, durch die sich der Schaft (432) erstreckt.

46. Einstellbare Verankerung, bestehend aus einem ersten Element (421) mit einem Langloch (425) und einem im Langloch aufgenommenen zweiten Element (430), wobei das Langloch wenigstens einen engen Bereich (426) hat, an dem sich breitere Bereiche (428) anschließen, welche Verankerungspositionen des zweiten Elementes (430) relativ zum ersten Element (421) bilden, dadurch gekennzeichnet, daß das zweite Element (430) relativ zum ersten Element (421) um eine Achse quer zur Erstreckungsrichtung des Langloches (425) drehbar und so geformt ist, daß in seiner ersten Winkelstellung relativ zum ersten Element das erste und zweite Element relativ in die Erstreckungsrichtung des Langloches zueinander bewegbar sind, und daß in seiner zweiten Winkelstellung relativ zum ersten Element das zweite Element gegen eine solche Bewegung durch Eingriffnahme in einen breiteren Lochbereich (428) gehindert ist.

47. Verankerung nach Anspruch 46, dadurch gekennzeichnet, daß das zweite Element (430) gegenüberliegende teilkreiszylindrische Bereiche hat, welche mittig auf der Querachse liegen und durch gegenüberliegende flache Bereiche verbunden sind, die um mehr als die Breite der engen Lochbereiche voneinander beabstandet sind, und daß die gegenüberliegenden Wände der breiteren Lochbereiche (428) betreffende Abschnitte der entsprechenden Zylinderflächen sind.

48. Verankerung nach Anspruch 46 oder 47, dadurch gekennzeichnet, daß eines der ersten (421) und zweiten (430) Elemente eine Halteeinrichtung (422) für einen Sicherheitsgurt hat, und das andere Element eine Einrichtung (432) zur Montage der Verankerung an einem Kraftfahrzeuggehäuse (414) aufweist.

49. Verankerung nach Anspruch 48, dadurch gekennzeichnet, daß das erste Element (421) ein Halteeinrichtung (422) für einen Sicherheitsgurt besitzt.

50. Verankerung nach einem der Ansprüche 34 bis 49, dadurch gekennzeichnet, daß das erste Element (421) einen ersten länglichen Plattenteil und zweiten länglichen Plattenteil hat, welch letzterer sich von einem Ende des ersten Plattenteile um einen Bereich eines Laufringes (402, 422) für den Sicherheitsgurt, welcher die Halteeinrichtung bildet, zu einer Position in flächenmäßiger Berührung mit dem ersten länglichen Bereich erstreckt, wobei das Langloch (420, 425) durch ausgerichtete Langlöcher im ersten und zweiten länglichen Teil gebildet ist.

51. Einstellbare Verankerung für ein Sicherheitsgurtsystem, bestehend aus einem Gleitstück (510) mit einer Halteeinrichtung (504, 505, 506) für ein Bauteil (501) des Sicherheitsgurtsystems, einer Schiene (530), die die Bewegung des Gleitstückes (510) längs der Schiene führt, um die Position des Gleitstückes relativ zur Schiene einzustellen, wobei die Schiene (530) einen in Längsrichtung sich erstreckenden hinteren Wandbereich (531) hat, und einer Verrigelungseinrichtung mit einem ersten Riegelelement (512) am Gleitstück und einer Reihe zweiter Riegelelemente (535), die in Abstand längs der Schiene angeordnet sind, wobei das Gleitstück gegen die Vorspannkraft einer federnden Vorspanneinrichtung (540) zwischen einer ersten Position, bei der das erste Riegelelemente (512) in Eingriff mit einem ausgewählten zweiten Riegelelement (535) steht, um das Gleitstück (510) an einer ausgewählten Position längs der Schiene (530) zu sichern, und einer zweiten Position schwenkbar ist, bei der das erste Riegelelement (512) vom zweiten Riegelelement (535) freigegeben ist, um eine Bewegung des Gleitstückes (510) längs der Schiene (530) in eine andere ausgewählte Position längs der Schiene zu ermöglichen, dadurch gekennzeichnet, daß die federnde Vorspanneinrichtung (540) direkt zwischen dem hinteren Wandbereich (531) und dem Gleitstück (510) wirkt, um das Gleitstück in die erste Position vorzuspannen.

52. Verankerung nach Anspruch 51, dadurch gekennzeichnet, daß die Halteeinrichtung (504, 505, 506), dad erste Riegelelement (512) und die Achse, um die das Gleitstück (510) schwenkbar ist, so am Gleitstück angeordnet sind, daß die Zugspannung im von der Halteeinrichtung gehaltenen Sicherheitsgurt (501) das erste Riegelelement (512) in Eingriff mit einem benachbarten zweiten Riegelelement (535) drücken will.

53. Verankerung nach Anspruch 51 oder 52, dadurch gekennzeichnet, daß die Schiene einen vorderen Wandbereich (534) mit einem darin vorgesehenen Längsschlitz hat, durch welchen Schlitz die Halteeinrichtung (504, 505, 506) des Gleitstückes (510) hindurchragt, wobei das Gleitstück sich in den vorderen (534) und hinteren (531) Wandbereichen gehalten ist und die vordere Wand schlitzseitig ausgerichtete Aussparungen (534) an ihren gegenüberliegenden Kanten hat, die eine Reihe von Paaren von zweiten Riegelelementens bilden, und daß das Gleitstück (510) entsprechend vorstehende Ausbildungen (512) zur Eingriffnahme in die Aussparungen hat, die ein Paare erste Riegelelement vorsehen.

54. Verankerung nach einem der Ansprüche 51 bis 53, dadurch gekennzeichnet, daß die federnde Vorspanneinrichtung (540) eine Torsionsfeder mit ersten und zweiten Armbereichen (545) umfaßt, die mit der Rückseite des Gleitstückes (510) in Eingriff stehen, während ein zwischenliegender Bereich (542) der Feder in Eingriff mit dem hinteren Wandbereich (531) der Schiene (530) steht.

55. Verankerung nach einem der Ansprüche 51 bis 54, dadurch gekennzeichnet, daß das Gleitstück (510) einen ersten im wesentlichen ebenen Bereich (514), einen zweiten im wesentlichen ebenen Bereich, der sich in einer zweiten Ebene parallel zur ersten Ebene erstreckt und gegenüber der ersten Ebene in eine Richtung quer zur Bewegungsrichtung des Gleitstücks (510) längs der Schiene (530) versetzt ist, und einen Übergangsbereich zwischen dem ersten und zweiten Bereich umfaßt, daß die Halteeinrichtung (504, 505, 506) am ersten im wesentlichen ebenen Bereich vorgesehen ist, und daß das Gleitstück (510) um eine Querachse schwenkbar ist, die sich durch den oder nahe am Übergangsbereich erstreckt.

## Revendications

1. Elément réglable de fixation destiné à un système de ceinture de sécurité comprenant un chariot (10; 110; 50; 76), un dispositif de support (5, 22; 105, 122; 57; 77) porté par le chariot et destiné à porter un constituant (2; 102) du système de ceinture de sécurité, une voie (30; 130; 40; 70) de guidage du chariot afin qu'il se déplace le long d'elle et permette le réglage de la position du chariot par rapport à la voie, et un dispositif de verrouillage (20; 120; 55, 59; 84, 88) porté par le chariot et destiné à coopérer avec la voie, caractérisé en ce que le dispositif de support (5, 22; 105, 122; 57, 73) est monté sur le chariot (10; 110; 50; 76) afin qu'il se déplace par rapport à celui-ci à partir d'une première position sous l'action d'une force appliquée audit constituant (2; 102) et par un dispositif (19, 22; 116, 122; 55; 79) commandé par ce déplacement et destiné à accentuer la coopération du dispositif de verrouillage (20; 120; 55, 59; 84, 88) avec la voie (30; 130; 40; 70).

2. Elément de fixation selon la revendication 1, comprenant un dispositif élastique (28) qui s'oppose au déplacement du dispositif de support (5, 22) depuis sa premiére position.

3. Elément de fixation selon l'une des revendications 1 et 2, comprenant un dispositif élastique (18; 118; 60; 86) rappelant le dispositif de verrouillage (20; 120; 55, 59; 85, 88) en position de coopération avec la voie (30; 130; 40; 70).

4. Elément de fixation selon la revendication 3, dans lequel la voie (30; 130; 40; 70) a plusieurs configurations de verrouillage (35; 135; 46; 80) espacées sur sa longueur et le dispositif de rappel (20; 120; 55, 59; 84, 88) est disposé de manière qu'il repousse l'élément de verrouillage (20; 120; 55, 59; 84, 88) de manière qu'il coopère avec une configuration adjacente de verrouillage (35; 135; 46; 80).

5. Elément de fixation selon la revendication 3, dans lequel le dispositif de verrouillage comporte au moins un bras (15; 115; 52; 77, 88) articulé sur le chariot (10; 110; 50; 76), les configurations de verrouillage comprenant des ouvertures (35; 135; 46; 80) formées dans une paroi (32; 132; 41, 74) de la voie (30; 130; 40; 70) dans laquelle peut pénétrer une partie d'extrémité (20; 120; 55; 79, 89) du bras (15; 115; 52; 77, 83).

6. Elément de fixation selon l'une des revendication 3 et 4, dans lequel la voie (30; 130) comporte des parois latérales parallèles opposées (32; 132), des ouvertures espacées (35; 135) formées dans les parois latérales, et une paroi avant (34; 134) ayant une fente longitudinale, le chariot comprend un organe (10; 110) en forme de plaque guidé par les parois avant et latérales afin qu'il coulisse et ayant une fente (11; 111) parallèle à la fente de la paroi avant, le dispositif de verrouillage comprenant deux bras (15; 115) analogues à des plaques, articulés (16; 116) sur l'organe en forme de plaque et ayant des extrémités libres (20; 120), et un dispositif à ressort (18; 118) rappellent les bras (15; 115) de manière qu'ils repoussent les extrémités libres (20; 120) dans les ouvertures (35; 135) des parois latérales, et le dispositif de support (5, 22; 105, 122) passe à travers la paroi latérale et les fentes (11; 111) du chariot et a une partie (25; 125) logée entre les bras (15; 115), le dispositif de support et les bras ayant des configurations destinées à coopérer (15, 25; 115, 125) si bien que le dispositif de support a, le long de la fente (11; 111) de l'organe en forme de plaque, une position dans laquelle les extrémités libres (20; 120) des bras sont repoussées en outre dans les ouvertures (35; 135) de la paroi latérale.

7. Elément de fixation selon l'une des revendications 4 et 5, dans lequel le dispositif de verrouillage (20; 120; 55, 59; 84, 88) et les configurations de verrouillage (35; 135; 46; 80) sont destinés à permettre un encliquetage du dispositif de verrouillage sur les configurations de verrouillage pendant le déplacement du chariot (10; 110; 50; 76) le long de la voie (30; 130; 40; 10) lorsque le dispositif de support (5, 22; 105, 122; 57; 77) est dans sa première position.

8. Elément de fixation selon l'une quelconque des revendications précédentes, dans lequel le dispositif de verrouillage comporte deux bras (15; 115) articulés sur le chariot (10; 110), avec le dispositif de support (5, 22; 105, 122) placé entre eux, les bras (15; 115) ayant une configuration telle que le déplacement du dispositif de support (5, 22; 105, 122) depuis sa première position provoque un déplacement des bras (15; 115) vers l'extérieur par effet de came avec une coopération accrue avec la voie (30; 130).

9. Elément de fixation selon la revendication 4, dans lequel la coopération du dispositif de verrouillage (120) avec la configuration adjacente (135) de verrouillage lorsque le dispositif de support (105, 122) est dans sa première position empêche le déplacement du chariot (110) dans un sens au moins, le dispositif de support (105, 122) étant mobile manuellement par rapport au chariot (110) dans une direction autre que la direction de déplacement, sous l'action de ladite force, afin que le dispositif de verrouillage (120) soit déplacé et permette un déplacement du chariot (110) dans la direction de déplacement au moins dans ledit sens.

10. Elément de fixation selon la revendication 9, dans lequel le dispositif de verrouillage (120) est articulé (116) sur le chariot (110) et le déplacement manuel du dispositif de support (105, 122) provoque un déplacement du dispositif de verrouillage (120) par effet de came à partir de sa position de coopération avec la voie (130).

11. Elément de fixation selon l'une des revendications 9 et 10, dans lequel le dispositif de verrouillage (120) comporte deux bras (115) articulés (116) sur le chariot (110), le dispositif de support (105, 122) étant placé entre eux, un mécanisme à axe (202) et à fente (200) agissant entre le dispositif de support (105, 122) et le chariot (110) et assurant un pivotement vers l'intérieur des bras (115) à la suite du déplacement manuel du dispositif de support (105, 122).

12. Elément de fixation selon la revendication 4, dans lequel la voie (40; 70) a plusieurs configurations de verrouillage (45, 80) espacées sur sa longueur et le dispositif de verrouillage (55, 59; 84, 88) a un premier dispositif de verrouillage (59; 89) rappèle de façon permanente afin qu'il coopère avec une configuration adjacente de verrouillage (46; 80) et s'oppose au déplacement du chariot (50; 70) le long de la voie (40; 70) mais sans l'empêcher, et un second dispositif de verrouillage (55; 79) destiné à coopérer avec une configuration de verrouillage (46; 80) lors du déplacement du dispositif de support (57; 77) par rapport au chariot (50; 76) à partir de la première position afin qu'il empêche le déplacement du chariot le long de la voie au moins dans un sens.

13. Elément de fixation selon la revendication 12, dans lequel le premier (89) et le second (79) dispositif de verrouillage ont des positions telles que la cooperation du premier dispositif de verrouillage (89) assure le positionnement du chariot afin que le second dispositif de verrouillage (79) puisse coopérer de façon précise avec une configuration de verrouillage (80).

14. Elément de fixation selon l'une des revendications 12 et 13, dans lequel le premier dispositif de verrouillage comporte une tige (59) d'encliquetage repoussée par un ressort.

15. Elément de fixation selon l'une des revendications 12 et 13, dans lequel le premier et le second dispositif de verrouillage (89, 79) sont des parties de verrouillage de bras (84, 88) rappelées par des ressorts et articulées sur le chariot (76).

16. Elément de fixation selon l'une quelconque des revendications 12 à 15, dans lequel le dispositif de support (52; 77) est articulé sur le chariot (50; 76) et le second dispositif de verrouillage est une partie d'extrémité (55; 79) du dispositif de support (52; 77).

17. Elément réglable de fixation destiné à un système de ceinture de sécurité, comprenant un chariot (110), une voie (130) guidant le chariot afin qu'il puisse coulisser le long de la voie dans un premier et un second sens opposés, un dispositif de support (105, 122) monté sur le chariot et destiné à supporter un constituant (102) du système à sangle de ceinture de sécurité, plusieurs cavités de verrouillage (135) espacées le long de la voie et un dispositif de verrouillage (120) monté de façon mobile sur le chariot (110) et rappelé afin qu'il coopère avec une cavité adjacente de verrouillage (135) et empêche le déplacement du chariot dans le premier sens au moins, caractérisé en ce que le dispositif de support (105, 122) peut coulisser par rapport au chariot (110) dans le premier et le second sens, et par un dispositif de coopération (200, 202) monté sur le dispositif de support (105, 122) et sur le dispositif de verrouillage (120) afin que, lors du déplacement du dispositif de support (105, 122) sur le chariot (110) dans le second sens, le dispositif de verrouillage (120) se déplace et permette un déplacement du chariot (110) au moins le premier sens.

18. Elément de fixation selon la revendication 17, caractérisé en ce que le dispositif de support (105, 122) est mobile sur le chariot (110) depuis une position intermédiaire, dans lequel le déplacement du chariot (110) dans le premier sens est empêché par coopération du dispositif de verrouillage (120) et de la cavité adjacente de verrouillage (135), dans le premier et le second sens vers une seconde et une troisième position respectivement, le chariot (110) étant libre de se déplacer dans les deux sens dans la seconde position et la coopération du dispositif de verrouillage (120) et des cavités de verrouillage (135) étant accentuée dans le seconde position.

19. Elément de fixation selon l'une des revendications 17 et 18, dans lequel le dispositif de verrouillage (120) comporte deux bras (115) articulés sur le chariot (110), le dispositif de support (122) étant placé entre eux, les cavités (135) de verrouillage étant disposées par paires, les cavités de chaque paire se trouvant sur les bords longitudinaux opposés (132) de la voie (130), et un mécanisme à axe et fente (200, 202) agissant entre le dispositif de support (120) et le chariot (110) et destiné à provoquer un déplacement des bras (115) vers l'intérieur à la suite du déplacement du dispositif de support (122) dans le premier sens.

20. Elément de fixation selon l'une quelconque des revendications précédentes, comprenant un dispositif (62; 82) de serrage sélectif du chariot (10; 110; 50; 76) sur la voie (30; 130; 40; 70).

21. Elément de fixation selon l'une quelconque des revendications précédentes, dans lequel le dispositif de support (5, 22; 105, 122, 57; 77) est destiné à loger l'extrémité supérieure du brin diagonal (1) d'une sangle de ceinture de sécurité.

22. Elément réglable de fixation, comprenant un élément (319; 327; 401) ayant une fente (323; 329; 405) qui a au moins une partie étroite (406) reliant des parties espacées relativement larges, un organe (301; 410) logé dans la fente et ayant une partie de base (302; 419) plus large que les parties relativement larges de fente, une partie intermédiaire (303; 418) destinée à se loger dans une partie relativement large de fente mais ne pouvant pas se loger dans une partie étroite de fente, une partie externe (305; 415) destinée à se loger dans une partie étroite de fente, et un dispositif élastique de rappel (318; 328; 420) rappelant l'organe de manière que sa partie intermédiaire (303; 418) se loge normalement dans une partie relativement large de fente mais permette le déplacement de l'organe (301; 410) malgré la force de rappel élastique vers une position dans laquelle la partie externe (305; 415) se loge dans la fente (323; 329; 405) et l'organe (301; 410) est mobile sur sa longueur, caractérisé en ce que l'organe (302; 410) logé dans la fente (323; 329; 405) a une partie (304; 416) placée entre les parties intermédiaire (303; 418) et externe (305; 415) qui a une dimension qui diminue progressivement vers l'extérieur, d'une largeur supérieure à la largeur de la partie étroite de fente (406) jusqu'à la largeur de la partie externe (305; 415).

23. Elément de fixation selon la revendication 22, dans lequel la partie de dimension variant progressivement est une partie tronconique (304; 416).

24. Elément de fixation selon l'une des revendications 21 et 22, dans lequel les parois de la fente (323; 329; 405) ont une configuration telle qu'elles coopèrent avec la partie (304; 416) de dimension variant progressivement de manière que l'organe (301; 410) logé dans la fente, lorsqu'il est libéré en position comprise entre des parties relativement larges de fente, soit repoussé par le dispositif élastique de rappel (318; 328; 420) dans une position dans laquelle sa partie intermédiaire (303; 415) se loge dans une partie relativement large de fente.

25. Elément de fixation selon l'une quelconque des revendications 22 à 24, dans lequel la partie étroite de fente (406) est de'limitée par des parties pointues opposées dépassant vers l'intérieur et appartenant aux parois de la fente (323; 329; 405).

26. Elément de fixation selon l'une quelconque des revendications 22 à 25, dans lequel le dispositif élastique de rappel comporte au moins un ressort de compression (328) agissant entre l'élément (327) ayant la fente et une butée (309) formée sur l'organe (301) logé dans la fente, la butée étant disposée à l'extérieur de la partie externe.

27. Elément de fixation selon la revendication 26, dans lequel le dispositif élastique comporte un ressort tronconique de compression (328) entourant la partie de diamètre variant progressivement et de section croissant dans le même sens que cette partie.

28. Elément de fixation selon l'une quelconque des revendications 22 à 25, comprenant un organe de support (315) dudit organe (301) logé dans la fente, l'organe de support (315) coopérant avec l'organe logé dan la fente (301) afin qu'il permette son déplacement malgré la force exercée par le dispositif élastique de rappel qui est un ressort de compression (318) agissant entre le support et l'organe logé (315, 301), l'organe ayant la fente étant un organe à section en U (319) ayant une paroi avant (322) formant une fente et une paroi arrière (320) distante de la paroi avant (322) et sur laquelle l'organe de support (315) peut coulisser.

29. Elément de fixation selon la revendication 28, dans lequel l'organe de support a une partie de base (316) et une partie (314) formant un plot de guidage dépassant de la partie de base, l'organe logé ayant une cavité (313) qui débouche dans la partie de base (316) et qui loge la partie (314) formant le plot de guidage afin qu'il puisse coulisser, et le dispositif élastique de rappel comporte un ressort de compression (318) logé dans la cavité (313) et agissant entre le support et l'organe logé (315, 301).

30. Système de ceinture de sécurité, comprenant un élément réglable de fixation selon l'une quelconque des revendications 22 à 29.

31. Elément réglable de fixation d'épaule destiné à un système de ceinture de sécurité, l'élément de fixation étant selon l'une quelconque des revendications 22 à 29.

32. Elément de fixation selon la revendication 31, dépendant de l'une des revendications 26 et 27, dans lequel l'élément (329) ayant la fente est une partie de la structure d'un véhicule à moteur, et l'organe logé (301) a un dispositif de support (310) d'une sangle de siège de véhicule, disposé vers l'extérieur de sa partie externe.

33. Elément de fixation selon la revendication 31, dépendant de l'une quelconque des revendications 22 à 25, dans lequel l'élément (401) ayant la fente a un dispositif de support (402) d'une sangle de siège de véhicule et comporte une première partie allongée et une seconde partie allongée partant d'une première extrémité de la première partie, passant autour d'une boucle (402) de passage de sangle constituant le dispositif de support d'une sangle, afin qu'elle soit au contact face à face avec la première partie, la fente (405) étant formée par des fentes alignées formées dans la première et dans la seconde partie.

34. Elément réglable de fixation destiné à un système de ceinture de sécurité, comprenant un premier organe (404; 424) ayant un dispositif délimitant une fente (405; 425) et un second organe (410; 430) logé dans la fente, le dispositif délimitant une fente délimitant plusieurs positions espacées (425) le long de la fente (405; 425) dans lesquelles le premier organe (404; 424) peut être fixé afin qu'il ne se déplace pas le long de la fente, et l'élément de fixation étant caractérisé en ce que le premier organe (404; 424) comporte un dispositif de support (402; 422) d'une sangle de siège et le second organe comporte un dispositif (412; 432) destiné à assurer la fixation sur une carrosserie de véhicule (414).

35. Elément de fixation selon la revendication 34, dans lequel le dispositif destiné à délimiter la fente a des parois de fente délimitant au moins deux parties relativement larges (428) de fente et au moins une partie intermédiaire relativement étroite (406; 426), une partie (415; 416; 418; 436) du second organe (410; 430) pouvant être logée dans la fente (405; 425) et pouvant coopérer avec le premier organe (404; 424) dans une première position par rapport au premier organe et à une partie relativement large de fente (428), et étant mobile de sa première position à une seconde position par rapport au premier organe (404; 424) afin que le second organe (410; 430) soit libéré de sa coopération avec le premier organe (404; 424) et puisse se déplacer le long de la fente (405; 425) vers une partie différente relativement large de fente (428).

36. Elément de fixation selon la revendication 35, dans lequel la partie du second organe (410) qui peut se loger dans la fente (405) comprend une première partie (418) de largeur suffisante pour qu'elle puisse coopérer avec les parois de la fente dans les parties relativement larges de fente dans la première position relative, et une seconde partie (415) de plus faible largeur, pouvant passer dans la partie relativement étroite de fente (406) depuis la seconde position relative, la première et la seconde position relative étant atteintes par déplacement relatif du premier et du second organe (404, 410) transversalement au plan dans lequel se trouve la fente (405).

37. Elément de fixation selon la revendication 36, dans lequel la première et la second partie (418, 415) sont des parties cylindriques de section circulaire placées coaxialement à un axe dans la direction duquel s'effectue le déplacement relatif du premier et du second organe (404, 410).

38. Elément de fixation selon la revendication 37, dans lequel la première et la seconde partie cylindrique de section circulaire (418, 415) sont reliées par une partie tronconique (416).

39. Elément de fixation selon l'une quelconque des revendications 36 à 38, comprenant un dispositif élastique de rappel (420) destiné à rappeler le premier et le second organe (404, 410) vers leur première position relative.

40. Elément de fixation selon la revendication 39, dans lequel le dispositif élastique de rappel est un ressort hélicoïdal (420) disposé autour du second organe (410) et ayant une première et une seconde extrémité qui sont respectivement en butée contre le premier organe (404) et ont une position permettant leur mise en butée contre une carrosserie d'un véhicule à moteur.

41. Elément de fixation selon l'une des revendications 39 et 40, dans lequel les parois de la fente ont une configuration telle qu'elles coopérent avec la partie (415, 416, 418) qui peut être logée ou le second organe (410) d'une façon telle que le second organe (410) est repoussé par le dispositif élastique (420) de rappel vers une partie relativement large de fente, lorsqu'il a été dégagé de la second position entre des parties adjacentes relativement larges de fente.

42. Elément réglable de fixation selon la revendication 35, dans lequel la partie (436) du second organe (430) qui peut se loger dans la fente (425) a une partie qui a une dimension, dans une première direction, qui est suffisamment grande pour qu'elle puisse coopérer avec les parois de la fente dans les parties relativement larges de fente (428) dans la première position relative, et une dimension, dans une seconde direction différente de la première, qui est suffisamment faible pour que le second organe (410) puisse passer dans la partie relativement étroite de fente (426) à partie de la seconde position relative, la première et la second position relative étant atteintes par rotation du second organe (410) autour d'un axe transversal au plan dans lequel se trouve la fente (425).

43. Elément réglable de fixation selon la revendication 42, dans lequel les parties relativement larges de fente (428) sont formées par des parties opposées de cylindre de section circulaire des parois de la fente et la partie (436) du second organe qui peut se loger dans la fente a des parties cylindriques opposées de section circulaire reliées par des parties plates opposées qui sont séparées par une distance qui ne dépasse la largeur de la partie la plus étroite de fente (426), la première et la seconde position relative du premier et du second organe (424, 430) étant obtenues par rotation du second organe (430) autour de l'axe du cylindre délimitant ces parties cylindriques de section circulaire.

44. Elément de fixation selon l'une des revendications 42 et 43, dans lequel le second organe (430) est une tige filetée (432) constituant le dispositif de fixation à une carrosserie de véhicule (414) et un épaulement (436) formé autour de la tige et ayant lesdites dimensions dans une première et une seconde direction transversales à l'axe de la tige (432).

45. Elément de fixation selon la revendication 44, dans lequel la tige est une tige (432) d'un boulon qui a une tête (431) qui est en butée contre le premier organe (424) dans la première et la seconde position relative du premier et du second organe (424, 430), l'épaulement (436) étant formé sur un collier (435) ayant un trou dans lequel passe la tige (432).

46. Elément réglable de fixation comprenant un premier organe (421) ayant une fente (425) et un second organe (430) logé dans la fente et ayant au moins une partie étroite (426) reliant des parties relativement larges (428), les parties relativement larges de fente déterminant des positions de fixation du second organe (430) par rapport au premier organe (421), et l'élément de fixation étant caractérisé en ce que le second organe (430) peut tourner par rapport au premier organe (421) autour d'un axe transversal à la direction de la fente (425) et a une configuration telle que, dans une première position angulaire par rapport au premier organe, le premier et le second organe sont mobiles l'un par rapport à l'autre dans la direction de la fente et, dans une seconde position angulaire par rapport au premier organe, le second organe ne peut pas se déplacer de cette manière étant donné sa coopération avec une partie relativement large de fente (428).

47. Elément de fixation selon la revendication 46, dans lequel le second organe (430) a des parties opposées de cylindre de section circulaire centrées sur l'axe transversal et reliées par des parties plates opposées qui sont séparées par une distance qui ne dépasse pas la largeur des parties étroites de fente (426), et les parois opposées des parties relativement larges de fente (428) sont des parties de surfaces cylindriques correspondantes.

48. Elément de fixation selon l'une des revendications 46 et 47, dans lequel l'un des premier et second organes (421, 430) a un dispositif de support (422) d'une sangle de ceinture et l'autre a un dispositif (432) de montage de l'élément de fixation sur une carrosserie (414) de véhicule à moteur.

49. Elément de fixation selon la revendication 48, dans lequel le premier organe (421) a un dispositif (422) de support d'une sangle de ceinture.

50. Elément de fixation selon l'une quelconque des revendications 34 à 49, dans lequel le premier organe (421) a une première partie allongée en forme de plaque et une seconde partie allongée en forme de plaque partant d'une première extrémité de la première partie allongée, passant autour d'une partie d'une boucle (402; 422) de passage d'une sangle, constituant le dispositif de support, et venant face à face au contact de la première partie allongée, la fente (420; 425) étant formée par des fentes alignées réalisées dans la première et la seconde partie allongées.

51. Elément réglable de fixation pour système de ceinture de sécurité, comprenant un chariot (510) ayant un dispositif de support (504, 505, 506) d'un constituant (501) du système à ceinture de sécurité, une voie (530) de guidage du chariot (510) afin qu'il se déplace le long de la voie et permette le réglage de la position du chariot par rapport à la voie, la voie (530) comprenant une partie (531) de paroi arrière disposéee longitudinalement, et un dispositif de verrouillage comprenant un premier élément de verrouillage (512) monté sur la chariot et une série de seconds éléments de verrouillage (535) espacés le long de la voie, le chariot pouvant basculer malgré la force de rappel du dispositif élastique de rappel (540) entre une première position dans laquelle le premier élément de verrouillage (512) coopère avec un second élément choisi de verrouillage (535) afin qu'il fixe le chariot (510) en position choisie le long de la voie (530) et une seconde position dans laquelle le premier élément de verrouillage (512) est dégagé du second élément de verrouillage (535) et permet le déplacement du chariot (510) le long de la voie (530) vers une position choisie différente le long de la voie, et l'élément de fixation est caractérisé en ce que dispositif élastique de rappel (540) agit directement entre la partie de paroi arrière (531) et le chariot (510) afin qu'il repousse le chariot verspsa première position.

52. Elément de fixation selon la revendication 51, dans lequel le dispositif de support (504, 505, 506), le premier élément de verrouillage (512) et l'axe autour duquel le chariot (510) peut pivoter sont disposés sur le chariot de manière qu'une force de traction appliquée à la sangle (501) de la ceinture supportée par le dispositif de support a tendance à rappeler le premier élément de verrouillage (512) en coopération avec un élément adjacent (535) des seconds éléments de verrouillage.

53. Elément de fixation selon l'une des revendications 51 et 52, dans lequel la voie a une partie de paroi avant (534) ayant une fente longitudinale, le dispositif de support (504, 505, 506) du chariot (510) dépassant par cette fente, le chariot étant retenu entre des parties de paroi avant et arrière (534, 531), et la fente de la paroi avant ayant des encoches alignées (535) dans ses bords opposés, constituant une série de paires d'éléments de verrouillage, le chariot (510) ayant des éléments correspondants en saillie (512) convenablement formés afin qu'ils coopèrent avec les encoches et constituant une paire de premiers éléments de verrouillage.

54. Elément de fixation selon l'une quelconque des revendications 51 à 53, dans lequel le dispositif élastique de rappel (540) est un ressort de torsion ayant une première et une seconde partie (544) formant des bras coopérant avec l'arrière du chariot (510), et une partie intermédiaire (542) coopérant avec la paroi arrière (531) de la voie (530).

55. Elément de fixation selon l'une quelconque des revendications 51 à 54, dans lequel le chariot (510) a une première partie (514) de forme générale plane, une seconde partie de forme générale plane disposée dans un second plan parallèle au premier plan et décalée par rapport au premier plan en direction latérale par rapport à la direction de déplacement du chariot (510) le long de la voie (530), et une partie de transition comprise entre la première et la seconde partie, le dispositif de support (504, 505, 506) étant placé sur la première partie de forme générale plane et le chariot (510) pouvant basculer autour d'un axe transversal passant par la partie de transition ou adjacent à cette partie de transition.

FIG.2.

FIG.1.

FIG.3.

FIG.5.

FIG.4.

FIG.6.

0 086 633

FIG.7a.

FIG.7b.

FIG.8.

FIG.9.

3

FIG.10.

FIG.11.

FIG.12.

FIG.13.

FIG.14.

FIG.15.

FIG.16.

FIG.17.

6

FIG.18.

FIG.19.

FIG.20.

FIG.21.

FIG.24.

FIG.22.

FIG.23.

FIG.25.

FIG.26.